# EUROPÄISCHE PATENTSCHRIFT

(11) **EP 2 729 841 B1**
(45) Veröffentlichungstag und Bekanntmachung des Hinweises auf die Patenterteilung: **09.09.2015**
(21) Anmeldenummer: 12731387.2
(22) Anmeldetag: 26.06.2012
(51) Int. Cl.: G02F 1/1334, G02F 1/1335, G02F 1/15, B42D 25/364

(54) **MEHRSCHICHTIGER FOLIENKÖRPER**
MULTI-LAYERED FOIL BODY
CORPS DE FILM MULTICOUCHE

(30) Priorität: 07.07.2011 DE 102011107421
(43) Veröffentlichungstag der Anmeldung: 14.05.2014
(73) Patentinhaber: Leonhard Kurz Stiftung & Co. KG, 90763 Fürth (DE); OVD Kinegram AG, 6301 Zug (CH)
(72) Erfinder: STAHL, Rainer, 90489 Nürnberg (DE); TOMPKIN, Wayne Robert, CH-5400 Baden (CH); WALTER, Harald, CH-8810 Horgen (CH)
(74) Vertreter: Louis Pöhlau Lohrentz
(86) Internationale Anmeldenummer: PCT/EP2012/062298
(87) Internationale Veröffentlichungsnummer: WO 2013/004541

(56) Entgegenhaltungen:
- WO-A1-2008/083921
- DE-A1-102007 048 102

## Beschreibung

Die Erfindung betrifft einen mehrschichtigen Folienkörper, ein Sicherheitselement mit mindestens einem Folienkörper, ein Sicherheitsdokument mit mindestens einem Folienkörper, eine Transferfolie mit mindestens einem Folienkörper sowie ein Verfahren zur Herstellung eines mehrschichtigen Folienkörpers.

WO 2009/043482 A1 (DE 10 2007 048 102 A1) beschreibt ein Sicherheitselement zur Kennzeichnung eines Sicherheitsdokuments wie einer Banknote. Das Sicherheitselement weist einen mehrschichtigen Folienkörper mit einer PDLC-Schicht auf, welche bei Anlegen eines elektrischen Felds reversibel von einem streuenden in einen transparenten Zustand wechselt (PDLC = Polymer Dispersed Liquid Crystal). Diese Änderung der Transmission wird durch eine piezoelektrische Energiequelle des Sicherheitselements gesteuert: beim Biegen eines piezoelektrischen Materials der Energiequelle wird eine elektrische Spannung erzeugt, welche an Elektroden beiderseits der PDLC-Schicht angelegt wird, um so das elektrische Feld zu generieren.

Die durch ein derartiges Sicherheitselement erzeugbaren Variationen des optischen Erscheinungsbildes sind unter ungünstigen Lichtverhältnissen oft nur schlecht zu erkennen und für den "Mann auf der Straße" zu wenig auffällig. Der damit erreichbare Fälschungsschutz ist somit relativ begrenzt.

Die WO 2008/083921 A1 offenbart einen Folienkörper gemäß dem Oberbegriff des Anspruchs 1 und betrifft ein Wert- oder Sicherheitsdokument mit einem optischen Sender. Zusätzlich zu einem visuellen wahrnehmbaren Signal soll ein visuell nicht wahrnehmbares Signal ausgesendet werden.

Hierzu gibt es bei einer Ausführungsform ein monochromes FlüssigkristallDisplay, dem ein Infrarotfilter vorgeschaltet ist. Bei dieser Ausführungsform ist ein Reflektor vorgesehen, vor dem ein Polarisator angeordnet ist. Auf einem Substrat mit einer transparenten Rückelektrode befindet sich eine flüssigkristalline Schicht, auf der sich ihrerseits eine strukturierte Elektrode befindet, und die strukturierte Elektrode umfasst Bildpunktelemente (Pixel).

Bei einer Abwandlung dieser Ausführungsform wird eine farbige Darstellung zusätzlich ermöglicht. Jedes Bildpunktelement (Pixel) umfasst drei Sub-Pixel für jeweilige Farbkomponenten, Blau, Grün und Rot. Ein weiteres Sub-Pixel dient zur Abstrahlung eines maschinenlesbaren Signals in einem visuell nicht wahrnehmbaren spektralen Bereich. Die Sub-Pixel umfassen Teilelektroden, vor denen sich entsprechende, die Eigenschaften des Sub-Pixels definierende Farbfilter befinden.

Die DE 10 2007 048 102 A1 beschreibt ein Sicherheitselement mit einer eine Änderungsschicht steuernden piezoelektrischen Energiequelle.

Der Erfindung liegt nun die Aufgabe zugrunde, ein optisch variables Sicherheitsmerkmal mit einem verbesserten optischen Erscheinungsbild bereit zu stellen.

Die Aufgabe wird gelöst durch einen mehrschichtigen Folienkörper zur Kennzeichnung eines Sicherheitsdokuments, insbesondere einer Banknote oder eines ID-Dokuments, welcher mindestens eine Farbfilterschicht und mindestens eine Änderungsschicht mit einem elektrisch steuerbaren Transmissionsgrad und/oder einer elektrisch steuerbaren Farbigkeit aufweist, die sich gegenseitig zumindest teilweise überlappen, sodass bei Änderung des Transmissionsgrades und/oder der Farbigkeit durch elektrische Steuerung ein Wechsel des Farbeindrucks für einen Betrachter des Sicherheitsdokuments erfolgt. Gemäß der Erfindung umfasst der Folienkörper zwei unterschiedlich gefärbte Farbfilterschichten und eine dazwischen angeordnete Änderungsschicht mit einem elektrisch steuerbaren Transmissionsgrad.

Die Aufgabe wird außerdem gelöst durch ein Sicherheitselement mit mindestens einem Folienkörper nach einem der Ansprüche 1 bis 11 und mindestens einer die Änderungsschicht steuernden Energiequelle, welche beispielsweise eine piezoelektrische Energiequelle mit mindestens einer Schicht aus piezoelektrischem Material sein kann. Die Aufgabe wird weiter gelöst durch ein Sicherheitsdokument, insbesondere eine Banknote, mit mindestens einem Folienkörper nach einem der Ansprüche 1 bis 11. Die Aufgabe wird auch gelöst durch eine Transferfolie mit mindestens einem Folienkörper nach einem der Ansprüche 1 bis 11, wobei der mindestens eine Folienkörper auf einer Trägerfolie der Transferfolie angeordnet und von dieser ablösbar ist. Und die Aufgabe wird gelöst durch ein Verfahren zur Herstellung eines mehrschichtigen Folienkörpers nach einem der Ansprüche 1 bis 11, wobei die Farbfilterschicht und/oder die mindestens eine Änderungsschicht des Folienkörpers durch Drucken, vorzugsweise auf eine Trägerfolie, gebildet werden.

Der Erfindung beruht darauf, dass Farbwechsel in einer optischen Anzeige, und Farben ganz allgemein, auch von Laien sehr gut wiedererkannt werden und gegenüber Laien einfach erklärt bzw. kommuniziert werden können. Sicherheitsmerkmale mit wechselnden farbigen Elementen bieten Sicherheitsdokumenten somit einen höheren Fälschungsschutz als Sicherheitsmerkmale, die lediglich einen Wechsel zwischen hell und dunkel zeigen. Durch die Überlagerung von Farbfiltern und abwechselnd streuenden oder transparenten Schichten lassen sich einprägsame Farbwechsel realisieren. Je nach optischem Schaltzustand der Änderungsschicht, streuend oder transparent, sieht ein Betrachter entweder eine Farbkombination der oberen Farbfilterschicht und der Änderungsschicht oder eine Farbkombination der oberen und unteren Farbfilterschichten und der Änderungsschicht. Für den Designer von Sicherheitsmerkmalen ergibt sich durch die vorliegende Erfindung eine große gestalterische Freiheit, für den "Mann auf der Straße" ein hoher Wiedererkennungswert eines Sicherheitselements mit dem erfindungsgemäßen Folienkörper.

Unter "Farbigkeit" wird jede Farbe verstanden, die in einem Farbmodell wie z. B. dem CMYK-Farbmodell (C = Cyan; M = Magenta; Y = Gelb; K = Schwarz) als "Farb"-Punkt innerhalb eines Farbraumes dargestellt werden kann. Eine vorzugsweise elektrische Ansteuerung der Änderungsschicht kann somit eine Änderung der Farbigkeit der Änderungsschicht von einem ersten "Farb"-Punkt zu einem zweiten "Farb"-Punkt hervorrufen. Dabei kann, je nach Wirkungsweise der Änderungsschicht, eine Änderung der Farbigkeit der Änderungsschicht auch als eine Kontraständerung der Änderungsschicht, z. B. von weiß nach schwarz, von weiß nach rot, oder von hell-rot nach dunkel-rot und/oder als eine Änderung der Farbintensität der Änderungsschicht, z. B. von hell-rot nach dunkel-rot, realisiert werden. Eine Änderung der Farbigkeit der Änderungsschicht kann auch eine Änderung des Transmissionsgrads der Änderungsschicht hervorrufen und umgekehrt. Durch eine Kombination mindestens einer Farbfilterschicht und der mindestens einen Änderungsschicht kann somit für einen Betrachter ein Wechsel der Farbigkeit zumindest eines Teilbereichs des Folienkörpers von einem ersten "Farb"-Punkt zu einem zweiten "Farb"-Punkt innerhalb eines Farbraumes wahrnehmbar sein.

Die vorliegende Erfindung bietet eine Möglichkeit, Farbwirkungen zu einem PDLC-Display hinzuzufügen. Dadurch ergibt sich der Vorteil, dass der optische Effekt einer herkömmlichen PDLC-Transmissionsänderung auffälliger und eindrucksvoller in Erscheinung tritt.

Bevorzugt basiert der Farbwechsel des Folienkörpers auf subtraktiver Farbmischung mithilfe von Farbfiltern, wobei die Änderungsschicht ebenfalls als ein Farbfilter wirken kann, z. B. im Falle einer eingefärbten Änderungsschicht. Die häufigsten Primärfarben für subtraktive Farbmischungen sind Cyan, Magenta und Gelb. Üblicherweise fällt weißes Licht, z. B. Sonnenlicht oder Licht einer Raumbeleuchtung auf den Folienkörper. Die einzelnen Farbfilter wirken durch selektive Absorption in Bezug auf das einfallende weiße Licht. Bezeichnet man die Farben der Farbfilter mit den Buchstaben C = cyan, M = magenta und Y = gelb, so resultieren bei Einfall von weißem Licht auf die Farbfilter C, M, Y die folgenden, jeweils rechts vom Pfeil angegebenen Farbwirkungen: C → cyan; M → magenta; Y → gelb; M+Y → rot; C+Y → grün; C+M → blau, C+M+Y → schwarz = vollständige Absorption des einfallenden Lichts.

Wenn im Folgenden von "unteren" oder "oberen" Schichten die Rede ist, so ist damit die relative Lage in Bezug auf einen Betrachter des Folienkörpers, insbesondere appliziert auf ein Substrat, beispielsweise ein Sicherheitsdokument, auf welches der Betrachter schaut, gemeint. Bei den erfindungsgemäß in dem Folienkörper vorgesehenen- zwei Farbfilterschichten ist eine "obere" Farbfilterschicht näher in Bezug auf einen Betrachter angeordnet als eine "untere" Farbfilterschicht. Falls der Folienkörper zur Betrachtung von beiden Seiten ausgebildet ist, d. h. keine Reflexionsschicht aufweist und zur Anordnung in oder über einem Fenster eines Sicherheitsdokuments angepasst ist, so wird diese relative Lagebezeichnung nach Möglichkeit vermieden, da die relative Lage in Bezug auf einen Betrachter je nach betrachteter Seite des Folienkörpers wechselt. In diesem Fall ist es günstiger, die Bezeichnungen "erste" Farbfilterschicht, "zweite" Farbfilterschicht, etc. zu verwenden.

Falls die Änderungsschicht einen elektrisch steuerbaren Transmissionsgrad aufweist, wird der opakere Zustand der Änderungsschicht als "geschlossen" bezeichnet, da in diesem Zustand die Änderungsschicht für Licht relativ undurchlässig ist. Der weniger opake bzw. transparentere Zustand der Änderungsschicht wird dagegen als "offen" bezeichnet, da in diesem Zustand einfallendes Licht durch die Änderungsschicht besser hindurch treten kann als im opakeren Zustand. Dabei ist es möglich, dass der Transmissionsgrad der Änderungsschicht abhängig von der Größe der angelegten Spannung stufenlos und frei zwischen zwei Extremwerten geändert werden kann, d. h. zwischen einem minimal lichtdurchlässigen, d. h. maximal opaken Zustand bei keiner angelegten Spannung und einem maximal lichtdurchlässigen Zustand bei einem bestimmten Spannungswert ungleich Null.

Vorteilhafte Ausgestaltungen der Erfindung sind in den Unteransprüchen bezeichnet.

Gemäß einer bevorzugten Weiterbildung weist die mindestens eine Änderungsschicht in einem elektrischen Feld ausrichtbare Flüssigkristalle auf. Bei den Flüssigkristallen handelt es sich vorzugsweise um PDLC-Material. Vorzugsweise weist die Änderungsschicht eine Schichtdicke von maximal 100 µm, insbesondere von maximal 20 µm, besonders bevorzugt von maximal 5 µm auf. Bei einer ID-Karte kann die Schichtdicke der Änderungsschicht wesentlich dicker sein, z. B. im Bereich von 20 bis 100 µm, vorzugsweise bei ca. 50 µm, als bei einer Banknote, bei welcher die Schichtdicke der Änderungsschicht vorzugsweise ca. 20 µm nicht überschreitet (ID = Identity). Je dicker die PDLC-Schicht ist, desto effektiver streut sie Licht und desto weniger ist im geschlossenen Zustand der Änderungsschicht ein darunter liegender Farbfilter für einen Betrachter sichtbar, d. h. desto besser lässt sich der darunter liegende Farbfilter gegenüber dem Betrachter verbergen.

Die Änderungsschicht ist vorzugsweise aus mindestens einer PDLC-Schicht gebildet. Aber auch die Verwendung anderer Materialien, welche sich unter Einfluss von Strom oder Spannung optisch verändern, beispielsweise einen Farbumschlag generieren oder aufleuchten, sind zur Bildung der Änderungsschicht verwendbar, wie beispielsweise elektrochrome Materialien, Schichtsysteme zur Bildung von Leuchtdioden, insbesondere organischen Leuchtdioden, oder elektrophoretische Anzeigeelemente. Durch die Verwendung von PDLC-Schichten ist eine einfache Kombination mit insbesondere piezoelektrischen Energiequellen möglich, da deren Leistungswerte gut aufeinander abstimmbar sind. Andere mögliche Energiequellen sind z. B. Solarzellen, insbesondere mittels Drucktechnologien herstellbare organische Solarzellen, Batterien, Kondensatoren oder ein oder mehrere Antennenelemente, die durch äußere, auf die Antennenelemente einwirkende elektromagnetische Felder elektrische Signale generieren können, wobei diese elektrischen Signale die zur Schaltung der Änderungsschicht notwendigen Strom- und/oder Spannungswerte aufweisen. Derartige Antennen arbeiten analog zu den aus RFID-Systemen bekannten Antennen (RFID = Radio Frequency Identification). Vorzugsweise liegen diese Energiequellen in Kombination mit der Änderungsschicht in Form eines Sicherheitselements vor. Dabei ist es bevorzugt, wenn diese Energiequellen, insbesondere eine Solarzelle oder eine Antenne, in eine Folie eingebettet sind, vorzugsweise in den mehrschichtigen Folienkörper ("in-foil"-Elemente).

Gemäß einer bevorzugten Weiterbildung weist der mehrschichtige Folienkörper zwei Elektroden auf, zwischen denen zumindest ein Teil der Änderungsschicht angeordnet ist. Besonders bevorzugt ist es, wenn die beiden Elektroden als eine obere und eine untere Elektrodenschicht ausgebildet sind, die oberhalb bzw. unterhalb der Änderungsschicht angeordnet sind. Dabei wird durch Anlegen einer Spannung an die beiden Elektroden im Raum zwischen den Elektroden ein elektrisches Feld erzeugt, welches zur Steuerung des Transmissionsgrads und/oder der Farbigkeit der Änderungsschicht dient. Die Elektroden, insbesondere die Elektrodenschichten, sind zumindest bereichsweise ausgebildet. Die Elektroden sind mit einer Energiequelle, welche eine elektrische Spannung bereitstellen kann, elektrisch leitend verbunden. Die Steuerung des Transmissionsgrads und/ oder der Farbigkeit der Änderungsschicht kann durch eine gewollte Handlung eines Benutzers erfolgen, z. B. durch Biegen einer piezoelektrischen Energiequelle oder Betätigen eines Tasters mit einer dadurch ausgelösten Beaufschlagung der Änderungsschicht mit einer elektrischen Spannung, oder ohne absichtliches Zutun eines Benutzers durch Einflüsse aus der Umgebung ausgelöst werden, z. B. durch unbewusstes Passieren eines RF-Feldes (RF = Radio Frequency) oder durch Einfall von Licht auf eine Solarzelle mit einer dadurch ausgelösten Beaufschlagung der Änderungsschicht mit einer elektrischen Spannung bzw. dem dadurch entstehenden elektrischen oder elektromagnetischen Feld.

Vorzugsweise ist die mindestens eine Änderungsschicht aus mindestens einer PDLC-Lage gebildet, vorzugsweise aus mindestens einer PDLC-Folie. PDLC-Folien, die unter anderem als so genanntes "smart glass" Verwendung finden, zeigen ein schnelles elektro-optisches Ansprechverhalten, haben typischerweise keinen Leckverlust, funktionieren ohne Verwendung eines Polarisators und sind relativ einfach herzustellen. PDLC-Folien bestehen aus einer großen Anzahl von Flüssigkristalltröpfchen (= LC-Tröpfchen; LC = Liquid Crystal = Flüssigkristall) mit Abmessungen im Mikrometerbereich, z.B. 0,05 µm bis 5 µm, die in eine Polymermatrix eingebettet sind. Die LC-Tröpfchen zeigen elektrische Anisotropie und Doppelbrechung. Wenn kein elektrisches Feld anliegt (geschlossener oder ausgeschalteter Zustand der PDLC-Folie) streut die PDLC-Folie aufgrund der unterschiedlichen Brechungsindizes der Flüssigkristalle und des Polymers einfallendes Licht an der Grenzfläche von Polymer und LC stark. Es ergibt sich ein milchig-trübes Aussehen der PDLC-Folie. Die Opazität, d. h. die Undurchsichtigkeit, der PDLC-Folie ist abhängig von ihrer Dicke, d. h. der Menge des LC-Materials, vorliegend in Form von LC-Tröpfchen, entlang der Betrachtungsrichtung, abhängig von der Dichte bzw. dem Anteil der LC-Tröpfchen in der Polymermatrix und abhängig von der Temperatur. Je dicker die Materialschicht ist, desto höher ist die Opazität. Je höher der Anteil der LC-Tröpfchen in der Polymermatrix ist, desto höher ist die Opazität. Je höher die Temperatur ist, desto höher ist die Opazität, insbesondere aufgrund der stärkeren Brownschen Bewegung der LC-Tröpfchen in der Polymermatrix.

In einem elektrischen Feld richten sich die LC-Tröpfchen in Richtung der elektrischen Feldlinien aus, und der Brechungsindex der Flüssigkristalle entspricht dem des Polymers, so dass die PDLC-Folie nicht mehr streuend wirkt, sondern transparent erscheint (= offener oder eingeschalteter Zustand der PDLC-Folie). Mit Flüssigkristallen, die sich in einem elektrischen Feld ausrichten lassen, sind aufgrund des Wechsels zwischen streuendem und transparentem Zustand optische Schaltelemente realisierbar, die nur geringe Schichtdicken aufweisen und die mechanischen Beanspruchungen wie Biegen oder Knicken widerstehen. Daher eignen sie sich insbesondere für Anwendungen auf Sicherheitsdokumenten wie z. B. Banknoten oder ID-Dokumenten, wie z. B. Chipkarten oder Passbüchern.

Die Dicke eines PDLC-Foliendisplays mit Farbfiltern ist kompatibel mit Anforderungen, die an Sicherheitsdokumente wie Banknoten oder ID-Dokumente gestellt werden. Ein erfindungsgemäßer Folienkörper mit einer PDLC-Folie ist relativ flexibel und ist daher kompatibel mit einer Anwendung auf einem Sicherheitsdokument wie einer Banknote oder einem ID-Dokument.

Gemäß einer bevorzugten Weiterbildung ist die PDLC-Lage eingefärbt. Dies kann durch Hinzufügen eines Farbstoffs oder eines Pigments, insbesondere eines Nano-Pigments in einen druckbaren PDLC-Lack erfolgen. In einer Ausführungsform dieser Weiterbildung besitzt die PDLC-Lage die gleiche Farbe wie eine erste Farbfilterschicht. Dadurch kann die Intensität der Farbe der ersten Farbfilterschicht reduziert werden, ohne den Farbeffekt bei geöffneter PDLC-Lage zu verändern. Dies ergibt einen weiteren Freiheitsgrad in der Gestaltung des Farbeffekts. Beispielsweise lässt sich so der Farbkontrast zwischen geschlossenem und geöffnetem Zustand der PDLC-Lage optimieren.

Falls die Änderungsschicht durch die eingefärbte PDLC-Lage gebildet ist, sieht ein Betrachter im opaken Zustand der PDLC-Lage die Farbe eines oberen Farbfilters in Kombination mit farbigem Licht entsprechend der Streuung in der eingefärbten PDLC-Lage. Unterhalb der eingefärbten PDLC-Lage angeordnete Schichten des Folienkörpers werden im Idealfall vom Betrachter nicht wahrgenommen, da durch die starke Streuung der PDLC-Lage kein Licht bis zu diesen unteren Schichten vordringen kann. Im transparent geschalteten Zustand der eingefärbten PDLC-Lage zeigt sich dem Betrachter dagegen eine Überlagerung der Farben des oberen Farbfilters, der eingefärbten PDLC-Lage sowie einer oder mehrerer unterhalb der eingefärbten PDLC-Lage angeordneter Schichten des Folienkörpers.

Gemäß einer bevorzugten Weiterbildung ist eine der zwei Farbfilterschichten musterförmig und die andere vollflächig homogen gefärbt ausgebildet. Umfasst der Folienkörper zwei Farbfilterschichten und eine dazwischen angeordnete Änderungsschicht mit einem elektrisch steuerbaren Transmissionsgrad, so ist es vorteilhaft, wenn die obere Farbfilterschicht vollflächig homogen gefärbt und die untere Farbfilterschicht musterförmig gefärbt ist. Im geschlossenen Zustand der Änderungsschicht erscheint einem Betrachter des Folienkörpers lediglich eine vollflächig homogene Farbfläche. Im offenen Zustand der Änderungsschicht dagegen erscheint einem Betrachter eine gemusterte Farbfläche, vorzugsweise mit einem gegenüber der vorher sichtbaren vollflächig homogenen Farbfläche farblich unterschiedlichen Farbhintergrund.

Ein Muster kann ganz allgemein ein graphisch gestalteter Umriss, ein Raster, eine figürliche Darstellung, ein Bild, ein Motiv, ein Symbol, ein Logo, ein Portrait, alphanumerische Zeichen, ein Text und dergleichen sein.

Gemäß einer bevorzugten Weiterbildung ist in zumindest einer der zwei Farbfilterschichten ein Muster mit unterschiedlich gefärbten Musterelementen ausgebildet. Dabei ist es möglich, dass die untere Farbfilterschicht ein Muster mit unterschiedlich gefärbten Musterelementen aufweist und die obere Farbfilterschicht eine vollflächig homogene Farbfläche ausbildet. In diesem Fall erscheint im geschlossenen Zustand der Änderungsschicht einem Betrachter des Folienkörpers lediglich eine vollflächig homogene Farbfläche, dagegen im offenen Zustand der Änderungsschicht das mit der vollflächig homogenen Farbfläche kombinierte, d. h. hinterlegte Muster. Alternativ ist es möglich, dass die untere Farbfilterschicht eine vollflächig homogene Farbfläche ausbildet und die obere Farbfilterschicht ein Muster mit unterschiedlich gefärbten Musterelementen aufweist. In diesem Fall erscheint im geschlossenen Zustand der Änderungsschicht einem Betrachter des Folienkörpers lediglich das Muster, dagegen im offenen Zustand der Änderungsschicht das mit der vollflächig homogenen Farbfläche kombinierte, d. h. von ihr überlagerte Muster.

Gemäß einer bevorzugten Weiterbildung weist der Folienkörper eine Reflexionsschicht auf, die in Bezug auf einen Betrachter hinter der mindestens einen Farbfilterschicht und der mindestens einen Änderungsschicht angeordnet ist. Dabei kann es sich um eine metallische Schicht, z. B. eine aufgedampfte Schicht aus Aluminium, Kupfer, Silber oder Gold handeln, oder um eine nichtmetallische, transparente, semitransparente bzw. transluszente HRI-Schicht oder HRI-Schichtenfolge (HRI = High Refractive Index). Im offenen Zustand der Änderungsschicht kann durch Reflexion einfallender Lichtstrahlen an der Reflexionsschicht eine Helligkeitssteigerung erzielt werden. Wird für die Reflexionsschicht eine transparente, semitransparente bzw. transluszente Schicht verwendet, dann kann eine auf dem Substrat angeordnete, insbesondere aufgedruckte Farbschicht als eine untere Farbfilterschicht fungieren. Dies setzt im Falle von oberhalb und unterhalb der Änderungsschicht angeordneten Elektrodenschichten voraus, dass diese Elektrodenschichten transparent oder zumindest halbtransparent ausgebildet sind, z. B. aus ITO (= Indium Tin Oxide = Indiumzinnoxid).

Gemäß einer bevorzugten Weiterbildung ist die Reflexionsschicht als eine Metallschicht ausgebildet, die gleichzeitig als Farbfilter wirkt. Bestimmte Metallschichten können in dieser Weise wirksam werden. Ein Beispiel für diese Ausgestaltung ist eine Kupferschicht, die hauptsächlich den roten Teil des sichtbaren Spektrums reflektiert. Ein dazu alternatives Beispiel ist eine an sich grau silberne Aluminiumschicht, auf die eine rote oder rotbraune durchscheinende Lackschicht aufgebracht ist, was zusammen einen ähnlichen optischen Farbeindruck ergibt wie eine Kupferschicht. Grau silberne Aluminiumschichten können auch mit andersfarbigen, transparent durchscheinenden Lacken kombiniert werden, um bestimmte metallisch farbige optische Eindrücke zu erzielen. Ein weiteres Beispiel ist eine dünne Silberschicht: Aufgrund von Plasmonenresonanzen des räumlich eingegrenzten Elektronengases weist eine solch dünne Silberschicht Farben auf, die sich von denen einer dicken Schicht unterscheiden. Zum Beispiel kann eine 4 nm dicke Silberschicht, die auf einer PET-Folie abgeschieden ist, eine blaue Farbe zeigen (PET = Polyethylenterephthalat). Weitere Beispiele für Reflexionsschichten mit mindestens einer Metallschicht sind ein reflektives Farbfilter nach dem Fabry-Perot-Typ (FP-Filter). Solche FP-Filter können halbtransparent oder opak sein. FP-Filter bestehen typischerweise aus drei Lagen: einer halbtransparenten Metallschicht, einer transparenten Abstandsschicht und einer halbtransparenten oder opaken metallischen Spiegelschicht. Die Farbe des FP-Filters variiert stark mit dem Betrachtungswinkel falls die Abstandsschicht ein Material mit einem niedrigen Brechungsindex ist, wie z. B. Polymere, MgF₂ oder SiO₂. Ein schwacher oder sogar unsichtbarer Farbwechsel kann realisiert werden, falls ein Material mit einem hohen Brechungsindex für die Abstandsschicht verwendet wird, z. B. ZnS oder TiO₂. Ein Farbfilter, der im Bezug auf den Betrachter unterhalb der Änderungsschicht angeordnet ist, kann sogar als untere Elektrode wirken, falls diese Filterschicht eine elektrisch leitfähige Schicht aufweist, z. B. eine Aluminium-verspiegelte Schicht eines FP-Filters.

Gemäß einer bevorzugten Weiterbildung weist der Folienkörper mindestens eine invariable Schicht auf. Insbesondere kann es sich dabei um mindestens eine gedruckte, z. B. opake Farbschicht handeln. Es ist vorteilhaft, die invariable Schicht musterförmig auszubilden, z. B. in Form eines Rahmens für eine darunter sichtbare Anzeigeschicht umfassend die mindestens eine Farbfilterschicht und die mindestens eine Änderungsschicht. Liegt diese invariable Schicht auf einer dem Betrachter zugewandten Seite des Folienkörpers, so sieht der Betrachter unabhängig vom Schaltzustand der Änderungsschicht die invariable Schicht. Liegt diese invariable Schicht auf einer dem Betrachter abgewandten Seite des Folienkörpers, so sieht der Betrachter die invariable Schicht überlagert durch die Farbe der Änderungsschicht.

Die invariable Schicht kann durch Aufdrucken, Hinzufügen oder Einbetten nichtvariabler Elemente in dem Folienkörper ausgebildet werden. Es ist vorteilhaft, die invariable Schicht auf dem oberen Farbfilter anzuordnen. Dabei kann die invariable Schicht ein unveränderliches Referenzobjekt, z. B. ein Muster, Symbol, Logo, bilden. Die invariable Schicht kann auch dazu benutzt werden, die darunter liegende variable Darstellung zu formen bzw. einen Umriss zu verleihen. Es ist möglich, transparente Bereiche, gefärbte Bereiche, opake, d. h. nichttransmittierende farbige oder metallische Muster, z. B. Druckfarbe oder OVI, und demetallisierte Aussparungen in einem metallischen OVD zu kombinieren (OVI = Optically Variable Ink; OVD = Optically Variable Device).

Gemäß einer bevorzugten Weiterbildung ist mindestens eine der mindestens einen Farbfilterschicht als eine cholesterische LC-Schicht ausgebildet. Es ist vorteilhaft, wenn die cholesterische LC-Schicht so ausgebildet ist, dass sie bei Änderung des Sichtwinkels den Farbton wechselt, z. B. einen Farbwechsel (= colour shift) von grün nach rot. Der durch Interferenz hervorgerufene winkelabhängige Farbton einer cholesterischen LC-Schicht ist dann besonders gut sichtbar, wenn die LC-Schicht von einem dunklen Hintergrund hinterlegt ist. Vor einem hellen Hintergrund ist der Farbton einer cholesterischen LC-Schicht nur schwach sichtbar, für den "Mann auf der Straße" praktisch unsichtbar. Falls mindestens eine der mindestens einen Farbfilterschicht als eine cholesterische LC-Schicht ausgebildet ist, ist es daher vorteilhaft, wenn in Bezug auf einen Betrachter hinter der cholesterischen Flüssigkristallschicht eine dunkle, d. h. absorbierende, oder streuende Schicht ausgebildet ist, vorzugsweise in Form eines Musters, Bildes, Symbols, Logos, etc. Der durch die musterförmige dunkle oder streuende Schicht hinterlegte Bereich der cholesterische LC-Schicht wird im offenen Zustand der Änderungsschicht als musterförmige interferenz-farbige LC-Schicht deutlich sichtbar, wohingegen außerhalb der musterförmigen dunklen oder streuenden Schicht angeordnete Bereiche der cholesterischen LC-Schicht nur ganz schwach farbig oder völlig transparent erscheinen.

Gemäß einer bevorzugten Weiterbildung ist mindestens eine der mindestens einen Farbfilterschicht als ein diffraktives Farbfilter ausgebildet. Ein Beispiel solcher diffraktiver Farbfilter sind Beugungsgitter nullter Ordnung, auch resonant gratings genannt, welche z. B. in der WO 03/059643 A1 beschrieben sind. Solche Beugungsgitter nullter Ordnung bestehen aus einer hochfrequenten Gitterstruktur und mindestens einer hochbrechenden Wellenleiterstruktur. Auch für diffraktive Farbfilter ist es vorteilhaft, wenn in Bezug auf einen Betrachter hinter dem diffraktiven Farbfilter eine dunkle, d. h. absorbierende, oder streuende Schicht ausgebildet ist, vorzugsweise in Form eines Musters, Bildes, Symbols, Logos, etc. Der durch die musterförmige dunkle oder streuende Schicht hinterlegte Bereich des diffraktiven Farbfilters wird im offenen Zustand der Änderungsschicht als musterförmige farbige Schicht deutlich sichtbar, wohingegen außerhalb der musterförmigen dunklen oder streuenden Schicht angeordnete Bereiche des diffraktiven Farbfilters nur schwach farbig oder transparent erscheinen.

Eine dunkle Hintergrundschicht kann z. B. durch Drucken einer dunklen Druckfarbe, z. B. schwarz, dunkelgrau, dunkelblau, dunkelgrün, dunkelrot, auf einer Elektrode oder auf einem Substrat erzeugt werden. Es ist auch möglich, die untere Elektrode durch ein OVD, insbesondere reflektiv, metallisiert, auszubilden; in diesem Fall kann das dunkle Muster in Form einer schwarz wirkenden Beugungsvorrichtung ausgebildet sein, z. B. als ein diffraktives Kreuzgitter einer Periodenlänge der Gitterstrukturen zwischen 150 nm und 500 nm, bevorzugt zwischen 190 nm und 420 nm, und einer Gittertiefe im Bereich von 50 nm bis etwa 1000 nm, bevorzugt im Bereich von 100 nm bis etwa 500 nm. Die obere Elektrode kann ebenfalls durch ein OVD, insbesondere reflektiv, metallisiert, ausgebildet sein, wobei es hierbei vorteilhaft ist, die Reflexionsschicht, insbesondere wenn sie metallisch ist, nur flächenbereichsweise vorzusehen und sie insbesondere besonders filigran auszugestalten, z. B. als feine Linien oder andere grafische Elemente mit geringer Flächenbelegung, um die Sichtbarkeit der darunterliegenden Schichten nicht einzuschränken. Insbesondere ist es möglich, ein Sicherheitsmerkmal mit stark kontrastierenden Eigenschaften herzustellen, wenn die obere Elektrode filigrane, metallisch reflektierende OVD-Bereiche aufweist und die Farbfilterschicht, unterstützt durch eine dunkle Hintergrundschicht, eine Farbigkeit mit möglichst hoher Farbsättigung.

Die optischen Eigenschaften einer cholesterischen LC-Schicht sowie von diffraktiven Farbfiltern können dazu ausgenutzt werden, im opaken Zustand der Änderungsschicht die Farbe einer oberen Farbfilterschicht praktisch unsichtbar zu machen: Der relativ schwache Farbton einer cholesterischen LC-Schicht oder eines diffraktiven Farbfilters ist durch die im geschlossenen Zustand streuende Änderungsschicht einfacher zu verbergen als der intensivere Farbton einer anderen Farbfilterschicht.

Es ist möglich, dass eine cholesterische LC-Schicht mit einem dunklen Hintergrund als ein unterer Farbfilter verwendet wird, der im geschlossenen Zustand praktisch unsichtbar ist. Dabei kann der dunkle Hintergrund ein Muster ausbilden. Der obere Farbfilter kann entweder farblos transparent sein oder farbig transparent sein, d.h. eine andere Farbe zeigen, die sich im transparenten Zustand der Änderungsschicht mit dem Farbton der cholesterischen LC-Schicht mischt.

Es ist auch möglich, dass eine cholesterische LC-Schicht als ein oberer Farbfilter verwendet wird, der im geschlossenen Zustand der Änderungsschicht praktisch unsichtbar ist, da die durch die Änderungsschicht gebildete Hintergrundschicht milchig-weiß ist. Dabei kann der untere Farbfilter lediglich durch eine dunkle, vorzugsweise schwarze Schicht ausgebildet sein. Im offenen Zustand der Änderungsschicht ist die cholesterische LC-Schicht nicht länger von der milchig-weißen Änderungsschicht hinterlegt, sondern von der durch die nun transparente Änderungsschicht hindurch sichtbare dunkle, untere Farbfilterschicht. Die Interferenzfarbe der cholesterischen LC-Schicht wird somit deutlich sichtbar.

Gemäß einer bevorzugten Weiterbildung variiert die Dicke der Änderungsschicht. Es ist möglich, dass die Änderungsschicht eine linear sich über die Breite der Schicht erstreckende Schichtdickenänderung aufweist, oder eine radial von einem Punkt ausgehende Schichtdickenänderung, z. B. von einem Mittelpunkt zu den Rändern der Änderungsschicht. Da ein dickerer Bereich der Änderungsschicht eine längere Zeitspanne oder eine höheres elektrisches Felds braucht, um sein Transmissions- oder Farbverhalten zu ändern als ein dünnerer Bereich, können auf diese Weise Farbänderungen in dem Folienkörper realisiert werden, die sich mit der Zeit und/oder mit der angelegten Spannung bzw. abhängig von deren zeitlichen Spannungsänderung örtlich verändern. Beispielsweise kann so ein Farbwechsel in Form einer Welle ausgebildet werden.

Das Sicherheitsdokument kann beispielsweise eine Banknote, Wertpapier, Aktie, Kreditkarte, Bankkarte, Barzahlungskarte, Kundenkarte, Ticket, oder ein ID-Dokument wie Ausweiskarte, Visum, Führerschein, Aufenthaltsdokument, Kraftfahrzeugschein, insbesondere eine Chipkarte oder ein Passbuch sein. Dabei ist es möglich, dass ein Passbuch mindestens eine Kunststoffkarte, z.B. aus PC (= Polycarbonat), aufweist, eine sogenannte Reisepasskarte. ID-Karten und Reisepasskarten sind z. B. als biegsame Kunststoffkarten mit einer üblichen Dicke im Bereich von 0,1 bis 1 mm ausgebildet. Ein derart dickes Sicherheitsdokument ist für ein Piezoelement zur Erzeugung einer Spannung von Vorteil. Es wurde nämlich erkannt, dass das Aufbringen einer Schicht aus piezoelektrischem Material in einer vergleichsweise geringen Schichtdicke im Bereich von bis zu 30 µm auf ein Sicherheitsdokument nicht zu einer piezoelektrischen Energiequelle mit optimaler Effizienz unter allen Bedingungen führt, wenn nicht gleichzeitig im Bereich der Energiequelle für eine geeignete Steifigkeit gesorgt wird. Die Spannungsausbeute der Schicht aus piezoelektrischem Material kann über die Steifigkeit des Verbunds aus Sicherheitselement und Sicherheitsdokument im Bereich der Energiequelle eingestellt werden. Dabei ist eine Abstimmung der Steifigkeit des Verbunds aus Sicherheitselement und Sicherheitsdokument im Bereich der Energiequelle sowie auch der Schichtdicke der Schicht aus piezoelektrischem Material dahingehend erforderlich, dass einerseits die zum Schalten der Änderungsschicht mindestens notwenige elektrische Spannung bzw. Feldstärke durch Verbiegen des Sicherheitsdokuments erzeugt werden muss und andererseits die Eigenschaften des dünnen Sicherheitsdokuments lokal nicht so stark verändert werden dürfen, dass die Steifigkeit zu einer Beeinträchtigung in der Handhabung oder Lebensdauer des Sicherheitsdokuments führt. Außerdem ist es dabei vorteilhaft, wenn die Handhabung des Sicherheitsdokuments, insbesondere beim Verbiegen zum Erzeugen der elektrischen Spannung bzw. Feldstärke, für einen ausreichend großen Benutzerkreis hinreichend einfach ist.

Gemäß einer bevorzugten Weiterbildung ist der Folienkörper zumindest bereichsweise in einem transparenten Bereich des Sicherheitsdokuments angeordnet. Der transparente Bereich kann eine durchgehende Fensteröffnung eines Sicherheitsdokuments, z. B. einer Papierbanknote oder einer Passbuchseite, oder ein unbedruckter Bereich eines transparenten Polymersubstrats oder einer Chipkarte sein. Durch diese Anordnung sind beide Seiten des Folienkörpers für einen Betrachter sichtbar. Dadurch ist es möglich, dass der Folienkörper je nach Betrachtungsrichtung (Betrachtung von vorne oder hinten), Lichteinfall (Auflicht oder Durchlicht) und Schaltzustand der Änderungsschicht (geschlossen oder offen) eine unterschiedliche optische Erscheinung zeigt.

Im Folgenden wird die Erfindung anhand mehrerer Ausführungsbeispiele unter Zuhilfenahme der beiliegenden Zeichnung erläutert. Es zeigen schematisch und nicht maßstabsgetreu
- Fig. 1: einen mehrschichtigen Folienkörper,
- Fig. 2: ein erstes Ausführungsbeispiel des Folienkörpers mit zwei vollflächigen Farbfiltern,
- Fig. 3: ein zweites Ausführungsbeispiel des Folienkörpers mit einem oberen vollflächigen und einem unteren gemusterten Farbfilter,
- Fig. 4: ein drittes Ausführungsbeispiel des Folienkörpers mit einem oberen gemusterten und einem unteren vollflächigen Farbfilter,
- Fig. 5: eine erste Darstellungsmöglichkeit gemäß dem dritten Ausführungsbeispiel,
- Fig. 6: eine zweite Darstellungsmögüchkeit gemäß dem dritten Ausführungsbeispiel,
- Fig. 7: ein viertes, nicht beanspruchtes Ausführungsbeispiel des Folienkörpers mit einem invariablen Aufdruck,
- Fig. 8: ein fünftes Ausführungsbeispiel des Folienkörpers mit einem eingefärbten PDLC,
- Fig. 9: ein sechstes Ausführungsbeispiel des Folienkörpers, bei dem ein mehrschichtiger Folienkörper über einem durchgehenden Fenster eines Sicherheitsdokuments angeordnet ist,
- Fig. 10: eine Darstellungsmöglichkeit gemäß dem sechsten Ausführungsbeispiel,
- Fig. 11: ein siebtes Ausführungsbeispiel des Folienkörpers, bei dem ein mehrschichtiger Folienkörper mit einem eingefärbten PDLC über einem durchgehenden Fenster eines Sicherheitsdokuments angeordnet ist,
- Fig. 12: einen nich beanspruchter Folienkörper ohne PDLC,
- Fig. 13: ein Ausführungsbeispiel eines Folienkörpers mit einer cholesterischen Flüssigkristallschicht, und
- Fig. 14: eine alternative nicht beanspruchte Ausführung des Beispiels aus Fig. 13 mit einer cholesterischen Flüssigkristallschicht,
- Fig. 15: ein weiteres Ausführungsbeispiel des Folienkörpers mit PDLC-Schichten variierender Dicke,
- Fig. 16: ein Sicherheitselement auf einem Sicherheitsdokument, und
- Fig. 17: eine Transferfolie.

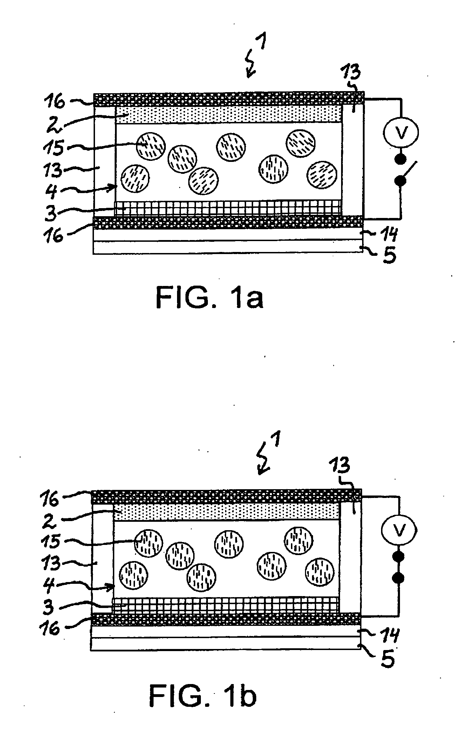

Fig. 1 zeigt einen mehrschichtigen Folienkörper 1 mit einer ersten Farbfilterschicht 2, einer Änderungsschicht 4 in Form einer PDLC-Schicht, einer zweiten Farbfilterschicht 3, einer Hilfsschicht 14 und einer Reflexionsschicht 5. Der Folienkörper 1 kann z. B. mittels einer Klebstoffschicht auf einem Substrat angebracht sein, wobei die Klebstoffschicht zwischen der Reflexionsschicht 5 und dem Substrat angeordnet ist. Beide Seiten der PDLC-Schicht 4 sind zumindest teilweise von Elektroden 16, d. h. einer ersten und einer zweiten Elektrodenschicht 16, bedeckt, an die zur Erzeugung eines elektrischen Feldes zwischen den Elektroden 16 eine Spannung V angelegt werden kann. Die obere Elektrode 16 ist bevorzugt transparent, transluzent oder semi-transparent, z. B. aus ITO oder aus Metallbereichen geringer Schichtdicke bestehend, insbesondere in Gitter- bzw. Rasterform. Die untere und/oder obere Elektrode 16 kann ein diffraktives Oberflächenrelief aufweisen, wobei eine elektrisch leitfähige metallische oder HRI-Elektrodenschicht dafür als optische Reflexionsschicht fungiert.

Falls die Änderungsschicht 4 in Form einer PDLC-Schicht vorliegt, ist es vorteilhaft, die Farbfilterschichten 2, 3 jeweils zwischen der Änderungsschicht 4 und den Elektrodenschichten 16 anzuordnen. Dadurch können z. B. Leckströme durch die PDLC-Schicht 4 reduziert werden.

Die optionale Hilfsschicht kann z. B. eine Klebstoffschicht, eine Schutzschicht oder eine Nivellierschicht sein.

Weiterhin weist der Folienkörper 1 eine Stützschicht 13 auf, welche senkrecht zur Ebene des Folienkörpers 1 gesehen einen Rahmen um die PDLC-Schicht 4 bildet. Eine derartige Stützschicht 13 trägt zu einer mechanischen Stabilisierung der PDLC-Schicht 4 bei. Bei nicht auf gleicher Ebene angeordneten Elektrodenschichten 16 trägt die Stützschicht 13 ferner zu einer Vereinheitlichung des Abstands zwischen der ersten und der zweiten Elektrodenschicht 16 im Bereich der PDLC-Schicht 4 bei, so dass das elektrische Feld über dem Bereich der PDLC-Schicht 4 möglichst konstant ist und die PDLC-Schicht 4 über ihre Fläche homogen schaltet. Zudem kann mittels der Stützschicht 13 eine Versiegelung oder optische Begrenzung der PDLC-Schicht 4 und/oder eine Optimierung der Haftung der zweiten Elektrodenschicht 16 erreicht werden. Die Stützschicht 13 kann auch als Begrenzungsrahmen für die in flüssigem oder wachsartigem Zustand aufzubringende PDLC-Schicht 4 dienen, damit diese PDLC-Schicht 4 registergenau örtlich begrenzt aufgebracht, insbesondere aufgedruckt und/oder aufgerakelt werden kann. Dabei ist die Stützschicht 13 elektrisch isolierend ausgebildet, um einen elektrischen Kurzschluss zwischen der ersten und der zweiten Elektrodenschicht 16 zu vermeiden. Die PDLC-Schicht 4 kann dabei in ihrer Flächenausdehnung kleiner, gleich oder größer ausgebildet sein als der durch den Rahmen 13 umschlossene Bereich.

Die PDLC-Schicht 4 besteht aus einem Polymermedium, in dem Flüssigkristalltröpfchen 15 dispergiert sind. In der PDLC-Schicht 4 sind die Flüssigkristallmoleküle im Mittel isotrop ausgerichtet, d. h. statistisch bzw. stochastisch gleichmäßig in alle Richtungen angeordnet, wenn keine Spannung an den Elektroden 16 anliegt. Einfallendes Licht wird durch die Unterschiede im Brechungsindex zwischen dem Flüssigkristall und dem Polymer gestreut. Im Ergebnis ist die PDLC-Schicht 4 milchig-weiß-opak, wie in Fig. 1 a gezeigt. Im Gegensatz dazu werden die Flüssigkristallmoleküle dann, wenn eine Spannung an den Elektroden 16 anliegt und somit in der PDLC-Schicht 4 ein elektrisches Feld vorhanden ist, parallel zum elektrischen Feld angeordnet, wie in Fig. 1b dargestellt, d. h. anisotrop angeordnet. Einfallendes Licht wird folglich durch die PDLC-Schicht durchgelassen, da keine Unterschiede hinsichtlich der Brechungsindizes zwischen dem Flüssigkristall und dem Polymer bestehen. Im Ergebnis ist die PDLC-Schicht 4 transparent.

Im Folgenden wird auf eine explizite Darstellung der Elektrodenschichten 16 verzichtet, um die Zeichnungen zu vereinfachen.

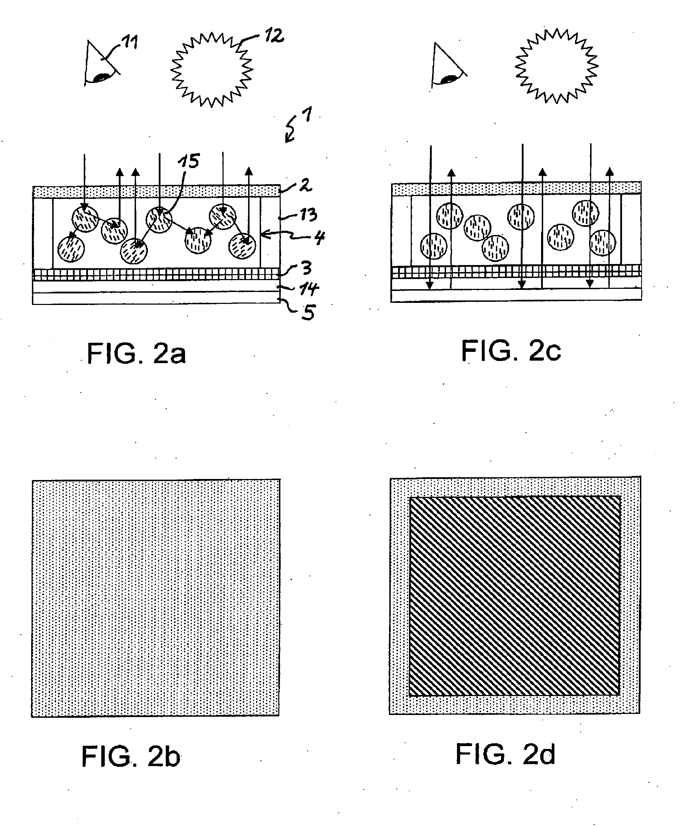

Fig. 2 zeigt ein erstes Ausführungsbeispiel des mehrschichtigen Folienkörpers 1 mit zwei vollflächigen Farbfiltern 2 und 3, zwischen denen eine PDLC-Schicht 4 angeordnet ist. Ein Betrachter 11 blickt von oben auf den Folienkörper 1, der im Auflicht mit weißem Licht von einer Lichtquelle 12 beleuchtet wird. Die PDLC-Schicht 4 kann zwischen einem opaken Zustand wie in Fig. 2a gezeigt und einem transparenten Zustand wie in Fig. 2c dargestellt, geschaltet werden. Der opake Zustand wird auch als "geschlossen" bezeichnet, da in diesem Zustand die PDLC-Schicht 4 nicht transparent ist. Der transparente Zustand wird auch als "offen" bezeichnet, da in diesem Zustand einfallendes Licht durch die PDLC-Schicht hindurch treten kann. Im geschlossenen Zustand, wie in Fig. 2a gezeigt, d. h. wenn keine Spannung an den Elektroden anliegt, ist die PDLC-Schicht streuend und opak und streut einfallendes Licht in Form eines matten Streukörpers. Im Idealfall wird das Licht zurück in den oberen Halbraum zurückgestreut und erreicht den Beobachter 11. Idealerweise erreicht nur ein geringer Anteil des einfallenden Lichts die untere Farbfilterschicht 3 und die Reflexionsschicht 5, sodass die untere Farbfilterschicht 3 dem Beobachter 11 im Wesentlichen verborgen bleibt. Dabei bestimmt der Anteil des Lichts, welcher im geschlossenen Zustand die untere Farbfilterschicht 3 erreicht, den Kontrast des Farbeffekts. Ist beispielsweise die obere Farbfilterschicht 2 gelb, so erscheint auch das zum Beobachter 11 zurück gestreute Licht gelb. Um im geschlossenen Zustand der Änderungsschicht 4 die untere Farbfilterschicht 3 noch besser verbergen zu können, ist es möglich, dass eine zusätzliche Streuschicht oder ein Graufilter zwischen den beiden Farbfilterschichten 2 und 3 positioniert wird, um die Opazität des Folienkörpers 1 zu erhöhen. Auch wenn derartige zusätzliche Streu- und Graufilterschichten die Farbe des zweiten Farbfilters 3 im transparenten Zustand der PDLC-Schicht 4 verändern, kann ein solcher zusätzlicher Streu- bzw. Graufilterkörper dazu beitragen, den visuellen Eindruck des Folienkörpers 1 zu optimieren. Wie bereits vorhergehend beschrieben, bestimmt auch die Dicke der PDLC-Schicht 4 sowie die Dichte der LC-Partikel in der PDLC-Schicht 4 deren Streuwirkung und somit deren Opazität.

Durch die erste Farbfilterschicht 2 einfallendes weißes Licht wird entsprechend den Gesetzen der subtraktiven Farbmischung durch die erste Farbfilterschicht 2 teilweise absorbiert. Das verbleibende Lichtspektrum wird in der PDLC-Schicht 4 gestreut. Zum Beobachter 11 rückgestreutes Licht durchläuft ein zweites Mal die erste Farbfilterschicht 2 und ruft beim Betrachter 11, falls die obere Farbfilterschicht 2 gelb ist, ebenfalls einen gelben Farbeindruck des Folienkörpers 1 hervor.

Wenn an die Elektroden zu beiden Seiten der PDLC-Schicht 4 Spannung angelegt wird, wird die PDLC-Schicht 4 idealerweise völlig transparent. In diesem Fall durchläuft einfallendes Licht zunächst die Farbfilterschicht 2. Falls diese Farbfilterschicht 2 gelb ist, wird der blaue Anteil des Spektrums im Filter 2 absorbiert und das verbleibende Licht enthält nur noch rote und grüne Anteile. Dieses gelbe Licht kann nachfolgend idealerweise ungehindert durch die PDLC-Schicht 4 hindurch laufen und passiert nachfolgend die untere Farbfilterschicht 3, die z. B. ein Cyanfilter ist. Das Licht, das durch die untere Farbfilterschicht 3 hindurch läuft, hat somit eine Kombination eines Gelbfilters 2 und eines Cyanfilters 3 durchlaufen, welche in Kombination grünes Licht ergeben. Folglich ist das Licht nach Durchlaufen des ersten und zweiten Farbfilters 2 und 3 grün und wird an der Reflexionsschicht 5 in den oberen Halbraum des Beobachters 12 zurückreflektiert. Während des nochmaligen Durchlaufens des Folienkörpers 1 passiert das Licht somit ein weiteres Mal die beiden Farbfilterschichten 2 und 3. Das Licht, das aus dem Folienkörper 1 nach oben austritt, zeigt ein dunkles Grün, da es beide Farbfilterschichten jeweils zweimal durchlaufen hat und somit die Ausfilterung aller Lichtanteile des Spektrums außer Grün besonders gründlich erfolgte.

Im geschlossenen Zustand der PDLC-Schicht 4 erscheint der Folienkörper 1 somit gelb, wie in Fig. 2b gezeigt. Im offenen Zustand dagegen erscheint der Folienkörper 1 nur im Bereich des Randelements 13 gelb, während es im sonstigen Bereich grün erscheint, wie in Fig. 2d gezeigt.

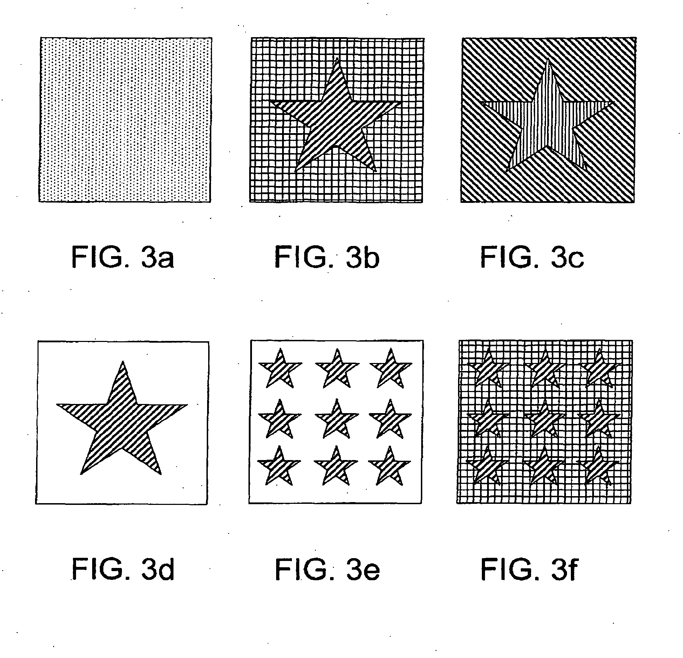

Fig. 3 zeigt ein zweites Ausführungsbeispiel, basierend auf dem in Fig. 2a gezeigten Schichtenaufbau, mit einem oberen vollflächig homogen gefärbten Farbfilter 2 und einem unteren gemusterten Farbfilter 3. Wenn die PDLC-Schicht 4 geschlossen ist, ist nur die obere Farbfilterschicht 2 sichtbar, wohingegen in offenem Zustand der PDLC-Schicht 4 eine Kombination des oberen und unteren Farbfilters 2 und 3 sichtbar ist. Fig. 3a zeigt einen gelben oberen Farbfilter, Fig. 3b zeigt einen unteren Farbfilter mit einem cyan-farbenen Hintergrund, auf dem ein magenta-farbener Stern angeordnet ist. Der obere Farbfilter und der untere Farbfilter zusammen ergeben das in Fig. 3c dargestellte Bild, bei dem ein roter Stern auf einem grünen Hintergrund angeordnet ist. Bei einer derartigen Kombination der in Fig. 3a und Fig. 3b gezeigten Farbfilterschichten ergibt sich somit in geschlossenem Zustand der PDLC-Schicht 4 das in Fig. 3a gezeigte gelbe Erscheinungsbild und im offenen Zustand der PDLC-Schicht 4 das in Fig. 3c gezeigte Erscheinungsbild.

Die Figuren 3d bis 3f zeigen weitere Varianten für die Ausbildung der unteren Farbfilterschicht 3. Fig. 3d zeigt einen magentafarbenen Stern auf einem transparenten Hintergrund, Fig. 3e zeigt eine Anordnung von magentafarbenen Sternen auf einem transparenten Hintergrund und Fig. 3f zeigt eine Anordnung von magentafarbenen Sternen auf einem cyanfarbenen Hintergrund. Kombiniert man nun den in Fig. 3a gezeigten oberen Farbfilter 2 mit den in Fig. 3d oder Fig. 3e gezeigten unteren Farbfiltern 3, so ist im geschlossenen Zustand eine gelbe Fläche sichtbar und im offenen Zustand der PDLC-Schicht 4 ein roter Stern bzw. eine Anordnung roter Sterne auf einem gelben Hintergrund sichtbar. Kombiniert man dagegen die in Fig. 3a gezeigte Farbfilterschicht mit der in Fig. 3f gezeigten Farbfilterschicht, so ist ähnlich wie in Fig. 3c eine Anordnung roter Sterne auf einem grünen Hintergrund sichtbar, wenn das PDLC transparent ist, während im geschlossenen Zustand der PDLC-Schicht lediglich der obere gelbe Farbfilter sichtbar ist.

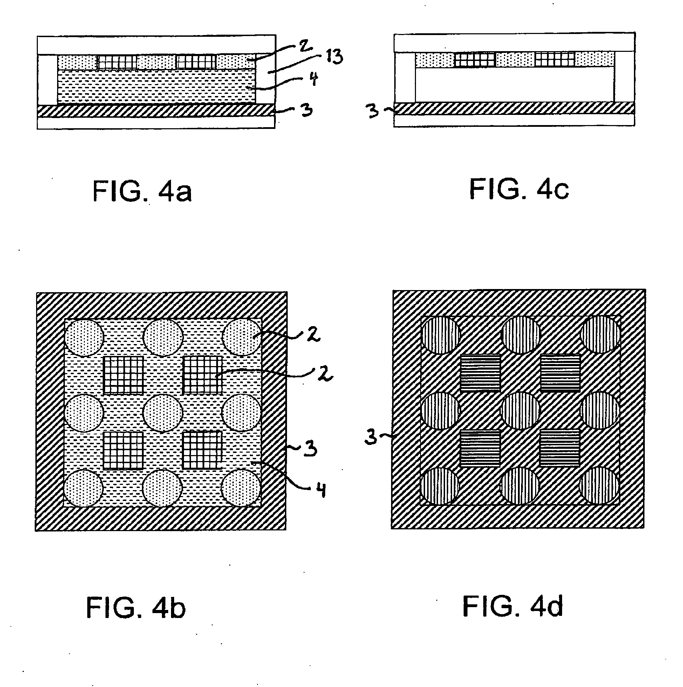

Fig. 4a und Fig. 4c zeigen dasselbe Folienelement mit einer PDLC-Schicht 4 in geschlossenem Zustand (Fig. 4a) und im offenen Zustand (Fig. 4c). Die obere Farbfilterschicht 2 besteht aus einer Anordnung gelber Kreise und cyanfarbener Quadrate. Die untere Farbfilterschicht 3 ist vollflächig magentafarben ausgebildet. Das die PDLC-Schicht 4 umschließende Randelement 13 ist in diesem Fall transparent ausgebildet. Fig. 4b zeigt das Erscheinungsbild für einen Betrachter im geschlossenen Zustand der PDLC-Schicht 4. Innerhalb des magentafarbenen Randes 3 ist die milchig-weiße, trübe Fläche der PDLC-Schicht 4 sichtbar, auf welcher die mehrfarbige gemusterte Anordnung der Kreise und Quadrate der oberen Farbfilterschicht 2 sichtbar sind. Wird nun die PDLC-Schicht 4 in den transparenten Zustand geschaltet, so ergibt sich die in Fig. 4d gezeigte Darstellung: Auf einer vollständig magentafarbenen Fläche sind nun rote Kreise und blaue Quadrate zu erkennen.

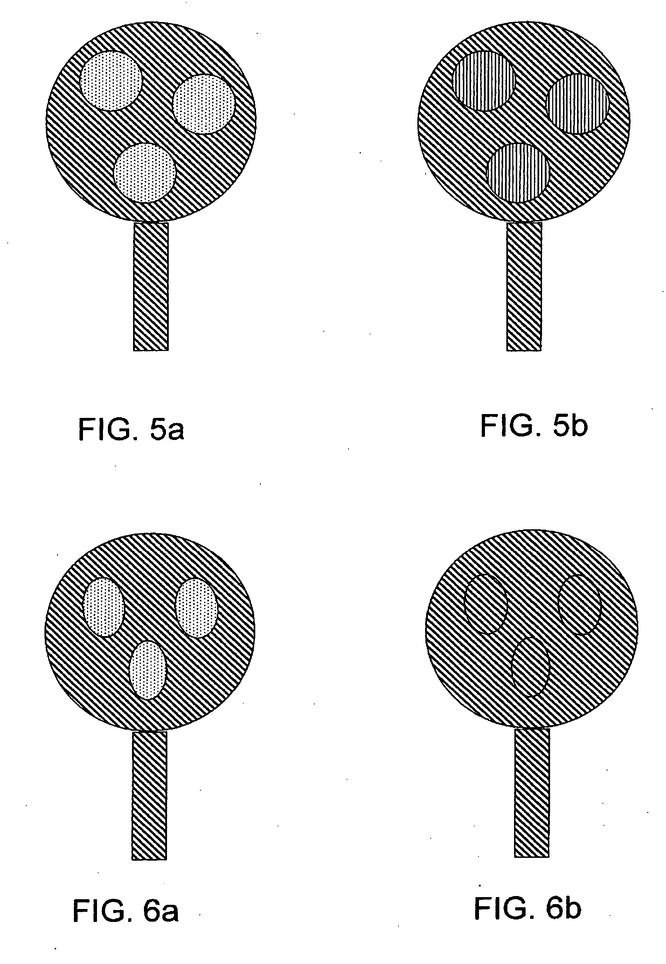

Fig. 5 zeigt eine erste Darstellungsmöglichkeit gemäß einem dritten Ausführungsbeispiel, basierend auf dem in Fig. 4a gezeigten Schichtenaufbau. Dabei rufen die Muster der oberen und unteren Farbfilter 2, 3 ein Wechselspiel hervor. Das Muster des oberen Farbfilters 2 ergibt einen grünen Apfelbaum mit gelben Äpfeln, während der untere Farbfilter 3 ein Muster aufweist, welches rote Äpfel vor einem farblosen Hintergrund ergibt. Im geschlossenen Zustand des PDLC-Elements 4 sieht ein Betrachter nur den oberen Farbfilter 2, d. h. es erscheint das in Fig. 5a gezeigte Bild eines grünen Apfelbaums mit gelben, d. h. unreifen, Äpfeln. Im transparenten Zustand des PDLC-Elements 4 ergibt sich durch die Überlagerung des oberen Farbfilters 2 und des nun ebenfalls sichtbaren unteren Farbfilters 3 ein Wechsel der Farbe der Äpfel von gelb zu orange, wie in Fig. 5b gezeigt. Somit kann durch die Farbänderung der Äpfel eine Reifung von Früchten angezeigt werden.

Fig. 6 zeigt eine weitere Darstellungsmöglichkeit gemäß dem dritten Ausführungsbeispiel, mit dem es möglich ist, Teile des oberen Musters verschwinden zu lassen. Die Darstellung basiert ebenfalls auf dem in Fig. 4a gezeigten Schichtenaufbau. Der obere Farbfilter 2 zeigt einen grünen Baum mit gelben Zitronen. Der untere Farbfilter 3 zeigt ein Muster mit blauen Zitronen vor einem farblosen Hintergrund. Im geschlossenen Zustand des PDLC-Elements 4 sieht ein Betrachter nur den oberen Farbfilter 2, d. h. es erscheint das in Fig. 6a gezeigte Bild eines grünen Zitronenbaums mit gelben Zitronen. Wenn das PDLC-Element 4 in den transparenten Zustand umgeschaltet wird, ändern die Zitronen aufgrund der Überlagerung des oberen 2 und nun ebenfalls sichtbaren unteren Farbfilters 3 ihre Farbe von gelb nach grün. Einem Betrachter ergibt sich so der Eindruck, als ob die Zitronen gepflückt worden wären. In einem solchen Fall ist es notwendig, die gelbe Farbe des oberen Filters 2 und die blaue Farbe des unteren Filters 3 aufeinander abzustimmen, sodass die sich durch Kombination ergebende grüne Farbe im Bereich der Zitronen mit der grünen Farbe des oberen Farbfilters im Bereich des Baums möglichst weit übereinstimmt. Andernfalls stimmt der Baum-Grünton des oberen Filters 2 und der durch Überlagerung des oberen und unteren Filters 2, 3 entstandene Zitronen-Grünton nicht genau überein und ein Betrachter erhält statt eines gleichmäßig grünen Baumes den Eindruck eines grünen Baumes mit Früchten in einem davon abweichenden Grünton.

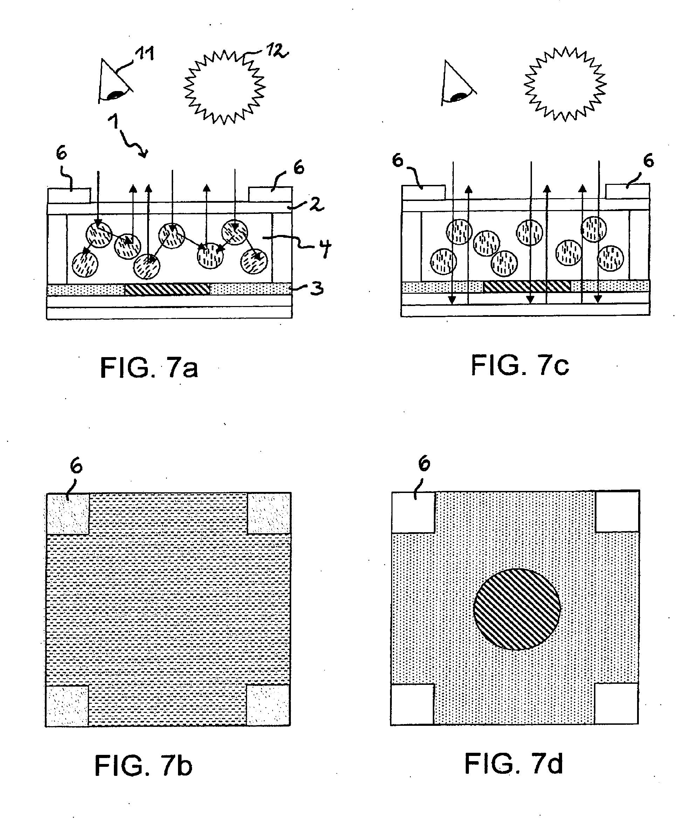

Fig. 7 zeigt ein viertes, nich beanspruchtes Ausführungsbeispiel mit einem invariablen Aufdruck. Fig. 7a zeigt einen Folienkörper 1 mit einem transparenten, farblosen oberen Farbfilter 2 und einem gemusterten unteren Farbfilter 3. Auf der dem Betrachter 11 zugewandten Seite des oberen Farbfilters 2 ist bereichsweise ein opaker Aufdruck in Form einer Druckschicht 6 angeordnet. Im geschlossenen Zustand der PDLC-Schicht 4 sieht der Betrachter 11, wie in Fig. 7b dargestellt, lediglich das Druckmuster 6 auf einem milchig-weißen Hintergrund der PDLC-Schicht 4. Wird nun die PDLC-Schicht 4 von dem opaken Zustand in den transparenten Zustand geschaltet, wie in 7c gezeigt, so ergibt sich eine Überlagerung der Druckschicht 6 mit dem Muster der unteren Farbfilterschicht 3 und ein Betrachter sieht das in Fig. 7d gezeigte Erscheinungsbild: Das Muster des unteren Farbfilters 3 bildet den Hintergrund, in diesem Fall eine gelbe Hintergrundschicht mit einem grünen Punkt, das von dem Druckbild 6 im Vordergrund überlagert ist.

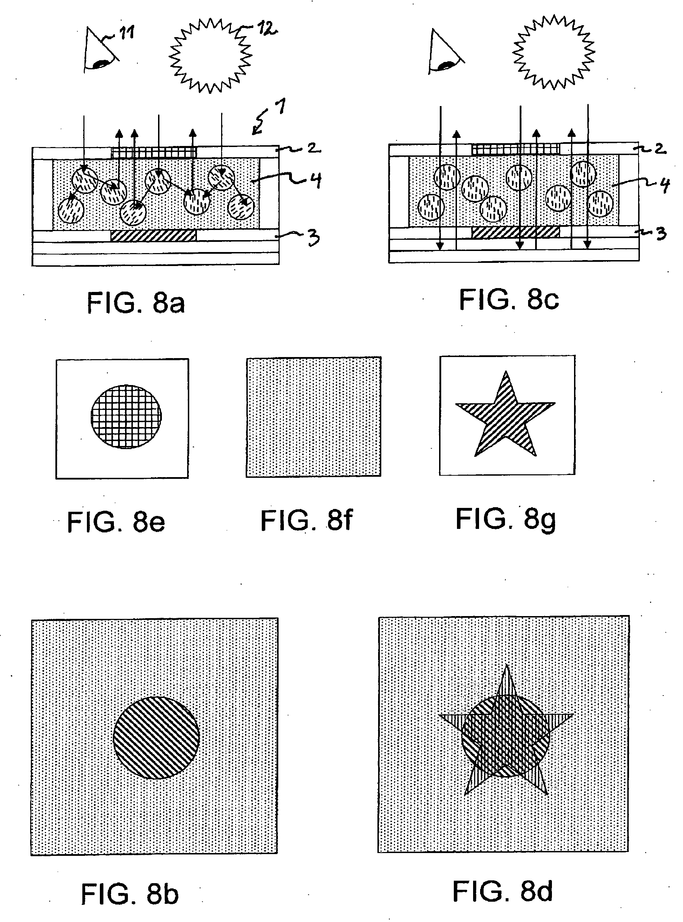

Fig. 8 zeigt ein fünftes Ausführungsbeispiel mit einer eingefärbten PDLC-Schicht 4. Der Folienkörper 1 umfasst einen oberen Farbfilter 2, einen unteren Farbfilter 3 und eine dazwischen angeordnete PDLC-Schicht 4. Durch die Einfärbung der PDLC-Schicht 4, z. B. mit einem Farbstoff, sieht ein Betrachter 11 im geschlossenen Zustand der PDLC-Schicht 4 sowohl die Farben des oberen Farbfilters 2 als auch die Farbe der PDLC-Schicht 4. Im transparenten Zustand der PDLC-Schicht 4, wie in Fig. 8c gezeigt, ergibt sich für den Betrachter 11 eine Überlagerung der beiden Farbfilterschichten 2 und 3 und der eingefärbten PDLC-Schicht 4. Die Figuren 8e bis 8g zeigen Beispiele für einen oberen Farbfilter 2 (Fig. 8e) in Form eines cyanfarbenen Kreises auf einem transparenten farblosen Hintergrund, eine gelbe PDLC-Schicht 4 (Fig. 8f) sowie eine untere Farbfilterschicht 3 (Fig. 8g) in Form eines magentafarbenen Sterns auf einem transparenten farblosen Hintergrund. In Fig. 8b ist das Erscheinungsbild im geschlossenen Zustand der PDLC-Schicht 4 dargestellt: Ein grüner Kreis auf einem gelben Hintergrund. Fig. 8d zeigt das Erscheinungsbild im transparenten Zustand der PDLC-Schicht 4: Der Bereich des Überlappens des unteren magentafarbenen Sterns, der gelben PDLC-Schicht und des cyanfarbenen Kreises ergibt einen Kernbereich eines Sterns mit einer grauen bis schwarzen Farbe, einen gelben Hintergrund, grüne Bögen sowie rote Spitzen des Sterns.

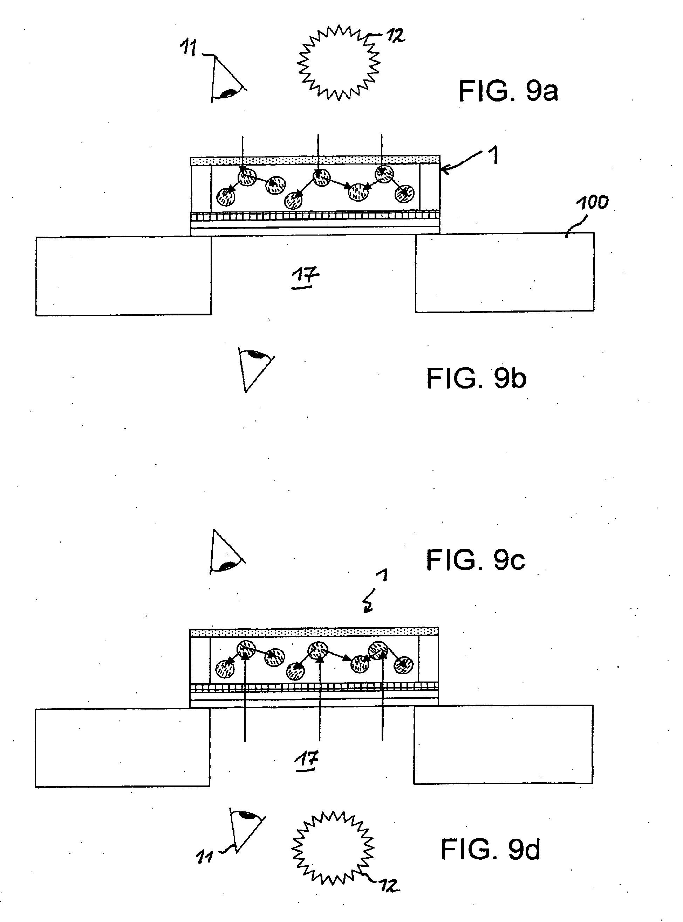

Fig. 9 zeigt ein sechstes Ausführungsbeispiel, bei dem ein mehrschichtiger Folienkörper 1 über einem durchgehenden Fenster 17 eines Sicherheitsdokuments 100 angeordnet ist. Auf diese Weise kann der Folienkörper 1 von beiden Seiten betrachtet werden, und zwar sowohl im Auflicht als auch im Durchlicht. Bei dem Sicherheitsdokument 100 kann es sich z. B. um eine Banknote handeln. Das Fenster 17 kann entweder ein z. B. ausgestanztes Loch in einer Papierbanknote oder einer Passbuchseite aus Papier oder ein transparenter Bereich in einer Polymerbanknote oder einer Chipkarte sein. Normalerweise wird man den Folienkörper 1 von der Vorderseite der Banknote im Auflicht betrachten, wie in Fig. 9a gezeigt. Allerdings kann man die Banknote auch wenden und die Rückseite ebenfalls im Auflicht betrachten, wie in Fig. 9d gezeigt. Andererseits kann man die Banknote auch im Durchlicht auf der Rückseite betrachten, wie in Fig. 9b, oder im Durchlicht auf der Vorderseite, wie in Fig. 9c gezeigt.

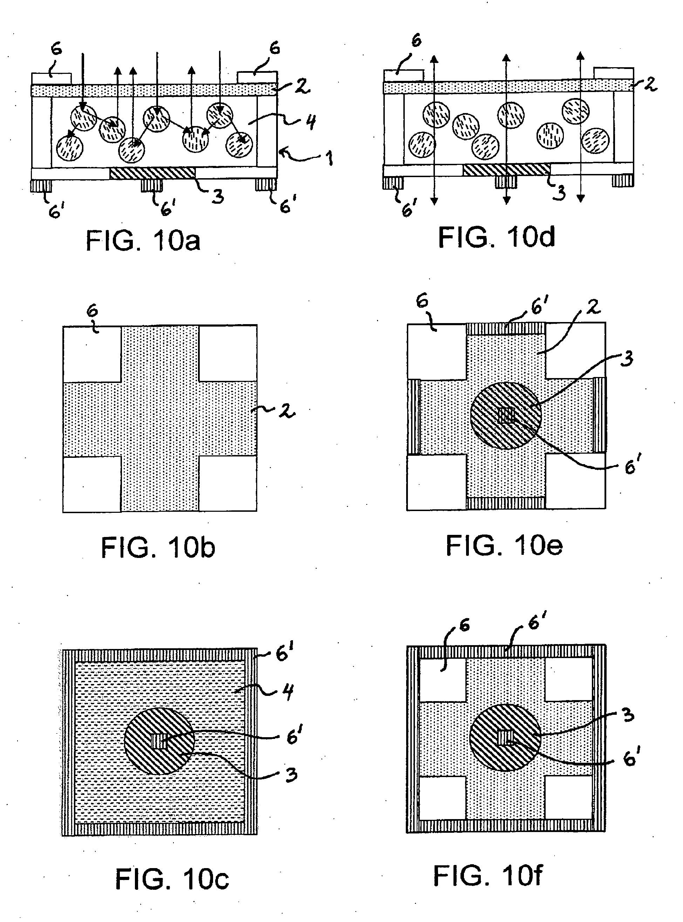

Fig. 10 zeigt eine Darstellungsmöglichkeit, gemäß dem sechsten Ausführungsbeispiel, für ein Banknotenfenster, bei dem der Folienkörper 1 sowohl Farbfilterschichten 2, 3 als auch Druckscfiichten 6, 6' auf seiner oberen und unteren Oberfläche aufweist. Wenn die PDLC-Schicht 4 opak ist, ergibt sich bei Betrachtung der Vorderseite die in Fig. 10b gezeigte Darstellung und bei Betrachtung der Rückseite die in Fig. 10c gezeigte Darstellung. Fig. 10b zeigt die Darstellung bei Betrachtung der Vorderseite des Folienkörpers 1, wobei lediglich die erste, beliebig gefärbte Druckschicht 6 und die gelb eingefärbte Farbfilterschicht 2 sichtbar ist. Bei Betrachtung der Rückseite im opaken Zustand ist, wie in Fig. 10c dargestellt, die zweite Druckschicht 6' zu erkennen, die vor dem Muster der unteren Farbfilterschicht 3 und dem milchig-weißen Hintergrund der "geschlossenen" PDLC-Schicht 4 sichtbar ist. Wird nun die PDLC-Schicht 4 in den transparenten Zustand, d. h. "offen" geschaltet, so ergeben sich die in Fig. 10e und Fig. 10f gezeigten Darstellungen, je nach Betrachtungsseite. Fig. 10e zeigt die Darstellung bei Betrachtung des Folienkörpers 1 von der Vorderseite, d. h. mit Blick auf die erste Farbfilterschicht 2. Durch die gelbe Farbfilterschicht 2 hindurch ist in den Lücken der ersten Druckschicht 6 die zweite Druckschicht 6' zu erkennen, sowie das Muster der unteren Farbfilterschicht 3. Bei Betrachtung von der Rückseite, d. h. mit Blick auf die untere Farbfilterschicht 3 ist, wie in Fig. 10f dargestellt, im Vordergrund die zweite Druckschicht 6' zu erkennen, sowie durch die gelbe Farbfilterschicht 2 hindurch die erste Druckschicht 6. Vor dem Hintergrund der ersten Farbfilterschicht 2 ist im Vordergrund die untere Farbfilterschicht 3 in Form eines grünen Kreises zu erkennen.

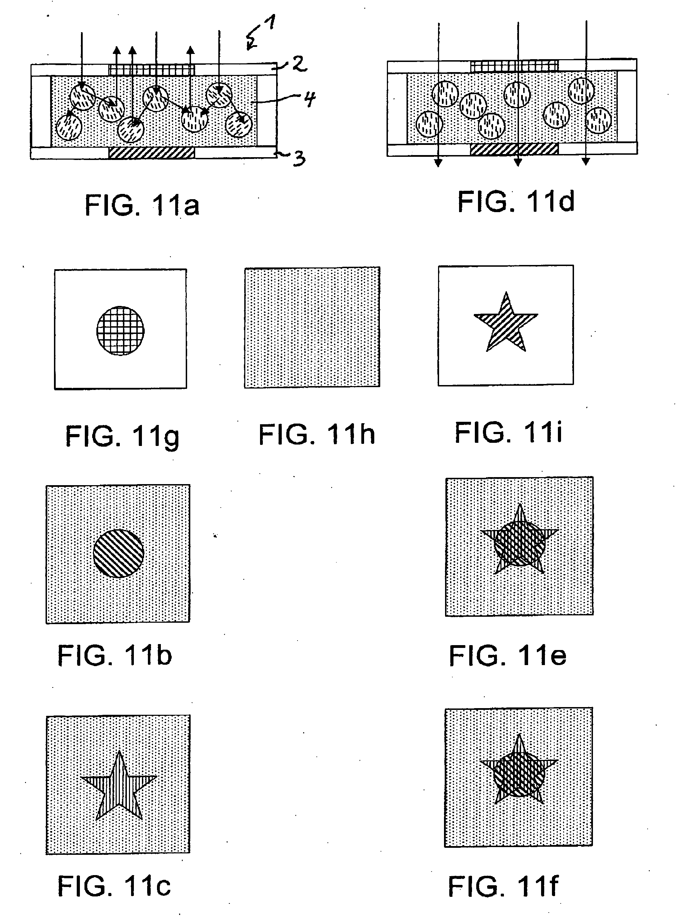

Fig. 11 zeigt, ähnlich wie Fig. 10a einen Folienkörper 1, welcher von beiden Seiten her betrachtet werden kann, wobei allerdings auch die PDLC-Schicht 4 eingefärbt ist und invariable Druckschichten fehlen. Fig. 11g zeigt den ersten Farbfilter 2, welcher einen cyanfarbenen Kreis auf einem transparenten farblosen Hintergrund zeigt. Fig. 11h zeigt eine gelb eingefärbte PDLC-Schicht 4 und Fig. 11 i zeigt die untere Farbfilterschicht 3 mit einem magentafarbenen Stern auf transparentem, farblosen Hintergrund. Im opaken Zustand (Fig. 11a) kann der Folienkörper 1 sowohl von der oberen Seite (Fig. 11b) als auch von der Rückseite (Fig. 11 c) betrachtet werden. Fig. 11b zeigt den Folienkörper 1 bei Betrachtung im opaken Zustand von der Vorderseite her, d. h. mit Blick auf das erste Farbfilter 2: Der Betrachter erkennt durch Überlagerung des cyanfarbenen Kreises des Farbfilters und der gelb eingefärbten PDLC-Schicht 4 einen grünen Kreis vor dem gelben Hintergrund der gelben PDLC-Schicht 4. Bei Betrachtung der Rückseite, d. h. mit Blick auf das zweite Farbfilter 3, sieht der Betrachter, wie in Fig. 11c gezeigt, einen roten Stern vor einem gelben Hintergrund. Wird nun die PDLC-Schicht 4 in den transparenten Zustand geschaltet, wie in Fig. 11d angedeutet, so sieht der Betrachter bei Blick auf die erste Farbfilterschicht 2 einen Innenbereich eines Sterns in grau bis schwarz mit roten Sternspitzen sowie grünen Bögen auf einem gelben Hintergrund (Fig. 11e). Dieses Bild ändert sich auch nicht auf Blickrichtung auf die untere Farbfilterschicht 3, wie in Fig. 11f dargestellt.

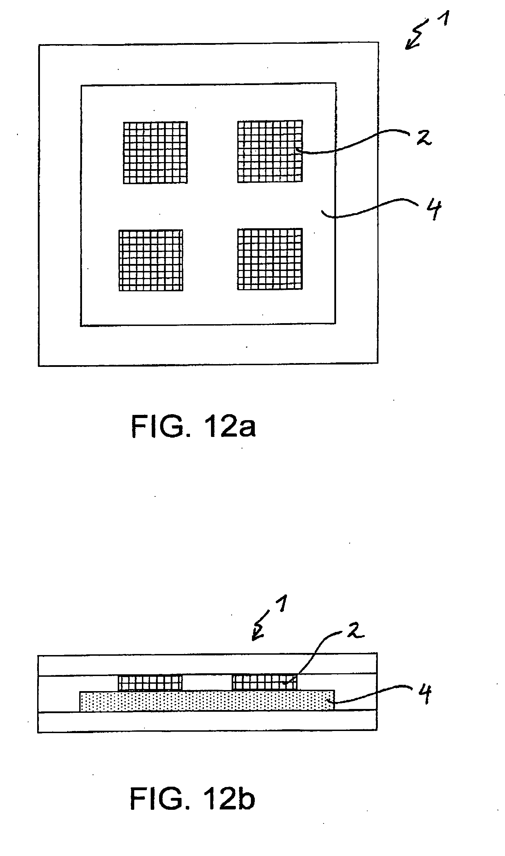

Fig. 12 zeigt einen nicht beanspruchter Folienkörper ohne PDLC-Schicht. Fig. 12a zeigt eine gemusterte obere Farbfilterschicht 2 in Form von gelben Quadraten. Darunter ist eine elektrochrome Schicht oder einer organische LED-Schicht als Änderungsschicht 4 angeordnet, welche allerdings nicht als PDLC-Schicht ausgebildet ist. Im Fall, dass die Änderungsschicht 4 als eine elektrochrome Schicht ausgebildet ist, liegen die zum Anlegen einer Spannung vorgesehenen Elektroden unmittelbar an ihr an. Wenn an der elektrochromen Schicht oder organischen LED-Schicht 4 keine Spannung anliegt, ist sie entweder farblos oder hat eine erste Farbe. Wenn an der elektrochromen Schicht oder organischen LED-Schicht 4 eine Spannung anliegt, färbt sie sich in eine zweite Farbe, z. B. blau. Wenn das Muster der Farbfilterschicht 2 die elektrochrome Schicht 4 überlappt, wie in Fig. 12a und Fig. 12b gezeigt, ergibt sich bei Anlegen einer Spannung eine Kombination beider Farben, wie in Fig. 12b gezeigt. Wenn das Muster der Farbfilterschicht die elektrochrome Schicht oder organische LED-Schicht 4 nicht überlappt, ist lediglich die zweite Farbe der elektrochromen Schicht oder organischen LED-Schicht 4 für einen Betrachter sichtbar. Ist beispielsweise die Farbe der Farbfilterschicht 2 gelb und wechselt das elektrochrome Material oder organische LED-Material 4 von farblos (spannungslos) zu blau (angelegte Spannung), so ergibt sich in den Überlappungsbereichen beim Schalten der elektrochromen Schicht oder organischen LED-Schicht 4 ein Wechsel von gelb zu grün und in den Nichtüberlappungsbereichen ein Wechsel von weiß zu blau.

Die untere Elektrode 16 kann reflektiv und im Wesentlichen opak sein oder die untere Elektrode 16 kann reflektiv und semi-transparent sein, wodurch in Zusammenwirken mit einem darunter liegenden hellen, insbesondere weißen Substrat, gegebenenfalls auch mit farbigen Aufdrucken, zusätzliche Vorteile erzielt werden oder weitere optische Effekte erzielbar sind.

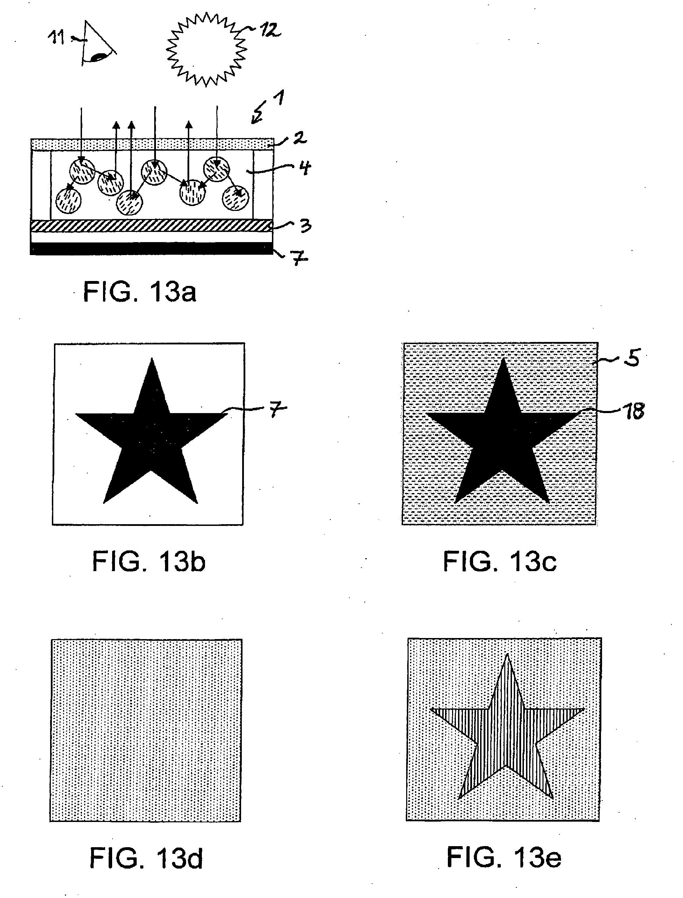

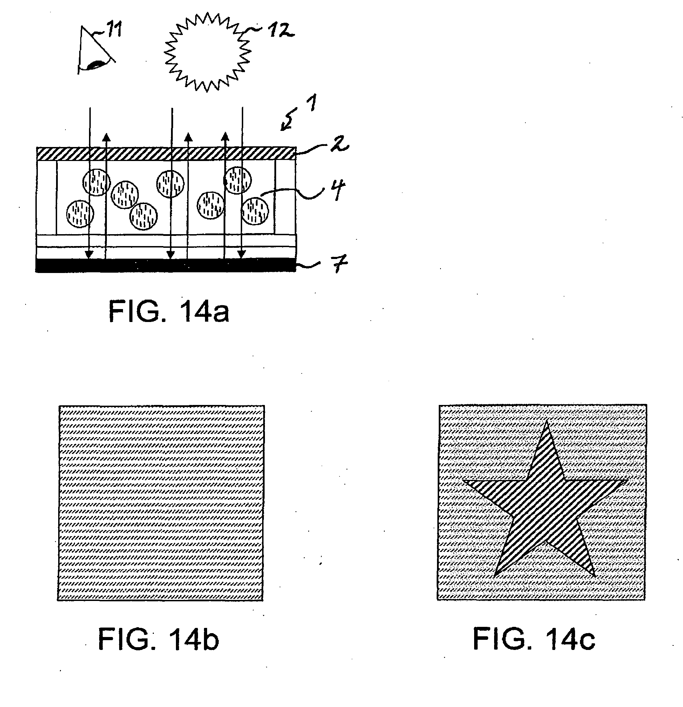

Fig. 13 und 14 zeigen Ausgestaltungen einer Ausführung mit mindestens einer cholesterischen Flüssigkristallschicht. Eine oder beide der Farbfilterschichten 2 und 3 sind durch cholesterische Flüssigkristallschichten ausgebildet, die betrachtungswinkelabhängige Interferenzfarben erzeugen. Unterhalb der beiden Farbfilterschichten 2 und 3 ist mit einer schwarzen oder dunklen, insbesondere dunkelgrauen, dunkelblauen, dunkelgrünen, dunkelroten Druckfarbe ein Muster in Form eines Sterns auf einen durchsichtigen oder weißen Hintergrund gedruckt, wie in Fig. 13b gezeigt. Dabei kann die Verwendung einer schwarzen Druckfarbe einen höheren Kontrast erzeugen, aber die alternativen, dunklen Farben können zusätzliche reizvolle Farbeffekte hervorrufen. Anstatt der schwarzen oder dunklen Druckfarbe kann das Muster auch durch eine diffraktive Struktur 18 auf einem reflektiven, z. B. metallischen Hintergrund 5, ausgebildet sein, wie in Fig. 13e dargestellt.

Ist nun, wie in Fig. 13a gezeigt, die obere Farbfilterschicht 2 als herkömmliche gelbe Farbfilterschicht ausgebildet und die untere Farbfilterschicht 3 durch eine cholesterische Flüssigkristallschicht gebildet, so ergibt sich im geschlossenen Zustand der PDLC-Schicht 4 die in Fig. 13d gezeigte Darstellung einer gelben Fläche, weil der Betrachter 11 auf die obere Farbfilterschicht 2 blickt. Wird die PDLC-Schicht 4 in einen transparenten Zustand geschaltet, so ergibt sich für den Betrachter die in Fig. 13e gezeigte Darstellung, bei der ein rot / grüner Stern, entsprechend dem Sichtwinkel auf die cholesterische Flüssigkristallschicht 3, vor einem gelben Hintergrund erkennbar ist.

Fig. 14a zeigt eine alternative nicht beanspruchte Anordnung einer cholesterischen Flüssigkristallschicht, bei der die obere Farbfilterschicht 2 in Form einer cholesterischen Farbfilterschicht vorliegt und keine weitere Farbfilterschicht vorhanden ist. Die dunkle Hintergrundschicht 7 ist analog zu den in Fig. 13b und Fig. 13c gezeigten Darstellungen ausgebildet. Im opaken Zustand sieht ein Betrachter das in Fig. 14b gezeigt Bild, d. h. der Folienkörper erscheint leicht bzw. schwach magentafarben. Beim Umschalten in den transparenten Zustand der PDLC-Schicht 4 ergibt sich für den Betrachter das in Fig. 14c gezeigte Bild, d. h. er sieht einen tief bzw. intensiv magentafarbenen Stern vor einem leicht bzw. schwach magentafarbenen Hintergrund.

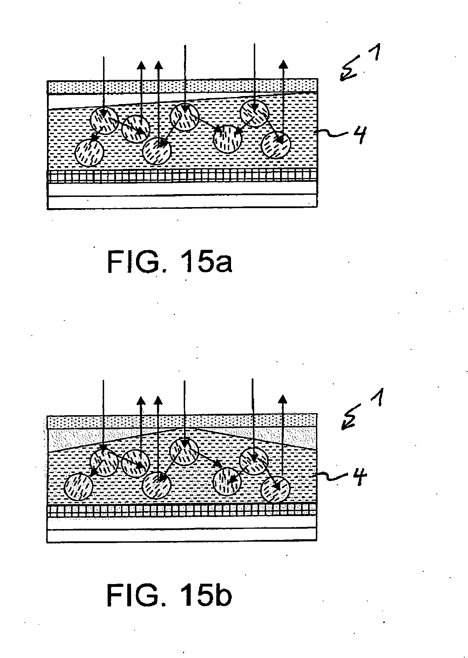

Fig. 15 zeigt Folienkörper 1 mit PDLC-Schichten 4 variierender Dicke. In dem in Fig. 15a gezeigten Ausführungsbeispiel variiert die Dicke der PDLC-Schicht 4 linear quer über den Folienkörper hinweg, von einer ersten, kleineren Dicke am linken Schichtrand zu einer zweiten, größeren Dicke am rechten Schichtrand. Bei dem in Fig. 15b gezeigten Ausführungsbeispiel fällt die Dicke von der Mitte hin zu den Rändern des Folienkörpers 1 ab. Da dickere PDLC-Schichten mehr Spannung brauchen um vom opaken in den transparenten Zustand umzuschalten, kann man durch eine Dickenänderung der PDLC-Schicht 4 Farbvariationen erreichen, die sich spannungsabhängig ändern, z.B. eine von Gelb nach Grün wechselnde Farbwelle, die mit zunehmender Spannung über den sichtbaren Bereich des Folienkörpers 1 hinweg wandert.

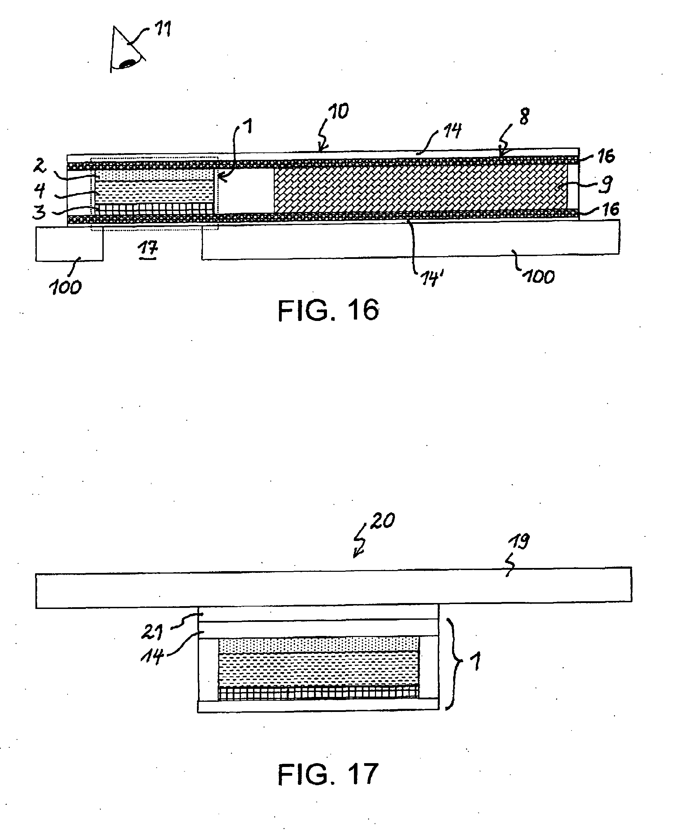

Fig. 16 zeigt ein Sicherheitsdokument 100, z. B. eine Papierbanknote, in dem eine das Papiersubstrat des Dokuments 100 vorzugsweise vollständig durchdringende Fensteröffnung 17 ausgebildet ist, z. B. durch Ausstanzen. Das Sicherheitsdokument weist eine Dicke von maximal 200 µm, insbesondere eine Dicke im Bereich von 50 bis 200 µm, hierbei bevorzugt im Bereich von 85 bis 140 µm, auf.

Auf einer Seite des Dokuments 100 ist, z. B. mittels einer nicht gezeigten Klebstoffschicht, ein Sicherheitselement 10 fixiert, welches einen mehrschichtigen Folienkörper 1 und eine piezoelektrische Energiequelle 8 umfasst. Der Folienkörper 1, welcher eine obere und eine untere Farbfilterschicht 2, 3 und eine dazwischen angeordnete PDLC-Schicht 4 umfasst, ist so angeordnet, dass er die Fensteröffnung 17 verschließt. Die piezoelektrische Energiequelle 8 enthält eine Schicht 9 aus piezoelektrischem Material, z. B. PVDF (=Polyvinylidenfluorid), an dessen beiden Seiten je eine Elektrodenschicht 16 anliegt.

Die Elektrodenschichten weisen eine Schichtdicke im Bereich von 1 nm bis 500 nm, vorzugsweise im Bereich von 10 nm bis 500 nm, auf. Dabei können die Elektrodenschichten opak oder zumindest lokal transparent ausgebildet sein. Zur Bildung der Elektrodenschichten haben sich Metalle oder Metall-Legierungen, wie Aluminium, Silber, Gold, Chrom, Kupfer und dergleichen, leitfähige nichtmetallisch anorganische Materialien wie ITO und dergleichen, Kohlenstoffnanoröhrchen, und leitfähige Polymere, wie PEDOT (= Poly(3,4-ethylendioxythiophen)), PANI (= Polyanilin), und dergleichen bewährt.

Die Bildung der Elektrodenschichten erfolgt insbesondere bei Bildung metallischer oder nichtmetallisch anorganischer Elektrodenschichten bevorzugt durch Aufdampfen oder Sputtern, oder insbesondere bei der Bildung polymerer Elektrodenschichten durch gängige Druckverfahren, wie Siebdruck, Inkjet-Druck, Hochdruck, Tiefdruck oder ein Aufrakeln. Aber auch die Verwendung einer Transferfolie zur Bildung von Elektrodenschichten mittels Heiß- oder Kaltprägens ist möglich.

Diese Elektrodenschichten 16 bilden eine elektrisch leitfähige Verbindung durch das Sicherheitselement 10 hindurch bis zu dem Folienkörper 1, wo sie jeweils zwischen einer der gegenüberliegenden Seite einer PDLC-Schicht 4 und einer der benachbarten Farbfilterschichten 2, 3 verlaufen.

Zur Außenseite hin ist das Sicherheitselement 10 von einer transparenten Schutzschicht 14 überzogen. Die Schutzschicht ist vorzugsweise als Trägerfilm, welcher selbsttragend ist, oder als Schutzlackschicht, welche aufgrund ihrer geringen Schichtdicke nicht selbsttragend ist, ausgebildet. Die Schutzschicht 14 ist vorzugsweise farbig transparent ausgebildet. Die Schutzschicht ist insbesondere aus PET, PEN (= Polyethylennaphthalat), PE (= Polyethylen), PI = (Polyimid), PP (= Polypropylen), PC oder PTFE (= Polytetrafluorethylen) gebildet.

Zwischen der piezoelektrischen Energiequelle 8 und dem Dokument verläuft eine Hilfsschicht 14' in Form einer höhenausgleichenden Nivellierschicht.

Es hat sich bewährt, wenn als piezoelektrisches Material ein Polymer, insbesondere vom Typ Polyvinylidenfluorid (= PVDF), eingesetzt wird. Aber auch andere piezoelektrische Materialien, wie Polyamide, Polyurethane, Fluorpolymere und insbesondere davon abgeleitete Copolymere sowie ferroelektrische Flüssigkristallelastomere sind verwendbar. Die Schicht aus piezoelektrischem Material weist vorzugsweise eine Schichtdicke von maximal 200 µm, bevorzugt von maximal 30 µm, insbesondere von maximal 5 µm auf. Für ID-Dokumente wie eine PC-Reisepasskarte haben sich Schichtdicken im Bereich bis 200 µm, bevorzugt bis 100 µm, als praktikabel erwiesen. Derart dünne Schichten aus piezoelektrischem Material sind insbesondere durch Drucken in einem oder mehreren Durchgängen herstellbar, wobei die Fähigkeit zur Erzeugung einer elektrischen Spannung beim Aufbringen einer Biegebelastung überraschender Weise erhalten bleibt, wenn eine geeignete Steifigkeit vorhanden ist.

Besonders bevorzugt ist es, wenn die als PDLC-Schicht ausgebildete Änderungsschicht 4 unter Einwirkung des elektrischen Feldes, das durch die piezoelektrische Energiequelle 8 durch Biegen derselben zwischen der ersten und der zweiten Elektrodenschicht 16 erzeugt wird, transparent wird. Die Energiequelle kann aber nicht nur durch Biegen, sondern auch thermisch über einen Temperaturgradienten, der über die Schicht aus piezoelektrischem Material angelegt wird, aktiviert werden.

Durch die Aktivierung der Energiequelle 8 können im Folienkörper 1 die farbig wechselnden optischen Darstellungen, wie oben beschrieben, hervorgerufen werden. Das Auslesen dieser optischen Informationen erfolgt insbesondere visuell und ohne weitere Hilfsmittel. Die durch den Folienkörper 1 erzeugten optischen Darstellungen können von der Oberseite 2 des Folienkörper 1 her, aber aufgrund des Fensters 17 auch von der Unterseite 3 des Folienkörpers 1 her betrachtet werden.

Fig. 17 zeigt eine Transferfolie 20. Es hat sich bewährt, wenn der Folienkörper 1 auf einer Transferfolie 20 bereitgestellt wird, so dass eine Applikation des Sicherheitselements 10 auf ein Sicherheitsdokument 100 mittels Prägens erfolgen kann. Eine solche Transferfolie 20 weist mindestens einen erfindungsgemäßen Folienkörper 1 auf, wobei der mindestens eine Folienkörper 1 auf einer Trägerfolie 19 der Transferfolie 20 angeordnet ist und von dieser ablösbar ist.

Ausgehend von der Trägerfolie 19 der Transferfolie 20 ist hier üblicherweise eine Ablöseschicht 21 vorhanden, um das Folienelement 1 nach dem Prägen von der Trägerfolie 19 der Transferfolie 20 lösen zu können. Auf einer der Trägerfolie19 der Transferfolie 20 abgewandten Seite der Ablöseschicht 21 ist vorzugsweise die als Schutzlackschicht ausgebildete optionale transparente Schutzschicht 14 und weiterhin der übrige Aufbau des Folienkörpers 1 vorhanden.

Der Folienkörper 1 kann mittels einer Klebstoffschicht, insbesondere aus einem Kalt- oder Heißkleber, am Sicherheitsdokument 100 fixiert werden. Die Klebstoffschicht kann aber auch bereits durch einen Trägerfilm gebildet sein, der an den Folienkörper 1 angrenzt.

### Bezugszeichenliste

- 1: Folienkörper
- 2: Farbfilterschicht, erste
- 3: Farbfilterschicht, zweite
- 4: Änderungsschicht
- 5: Reflexionsschicht
- 6: invariable Schicht
- 7: dunkle Schicht
- 8: piezoelektrische Energiequelle
- 9: Schicht aus piezoelektrischem Material
- 10: Sicherheitselement
- 11: Betrachter
- 12: Lichtquelle
- 13: Randelement
- 14: Hilfsschicht
- 15: LC-Tröpfchen
- 16: Elektrode
- 17: Fenster
- 18: diffraktive Schicht
- 19: Trägerfolie
- 20: Transferfolie
- 21: Ablöseschicht
- 100: Sicherheitsdokument

## Patentansprüche

1. Mehrschichtiger Folienkörper (1) zur Kennzeichnung eines Sicherheitsdokuments (100), insbesondere einer Banknote oder eines ID-Dokuments, welcher mindestens eine Farbfilterschicht (2) und mindestens eine Änderungsschicht (4) mit einem elektrisch steuerbaren Transmissionsgrad und/oder einer elektrisch steuerbaren Farbigkeit aufweist, die sich gegenseitig zumindest teilweise überlappen,
**dadurch gekennzeichnet,**
**dass** der Folienkörper (1) zwei unterschiedlich gefärbte Farbfilterschichten (2, 3) und eine dazwischen angeordnete Änderungsschicht (4) mit einem elektrisch steuerbaren Transmissionsgrad umfasst.

2. Folienkörper (1) nach Anspruch 1,
**dadurch gekennzeichnet,**
**dass** die mindestens eine Änderungsschicht (4) in einem elektrischen Feld ausrichtbare Flüssigkristalle (15) aufweist.

3. Folienkörper (1) nach einem der vorhergehenden Ansprüche,
**dadurch gekennzeichnet,**
**dass** die mindestens eine Änderungsschicht (4) aus mindestens einer PDLC-Lage gebildet ist, wobei bevorzugt die PDLC-Lage eingefärbt ist.

4. Folienkörper (1) nach einem der vorhergehenden Ansprüche,
**dadurch gekennzeichnet,**
**dass** eine der zwei Farbfilterschichten (2, 3) musterförmig und die andere vollflächig homogen gefärbt ausgebildet ist.

5. Folienkörper (1) nach einem der vorhergehenden Ansprüche,
**dadurch gekennzeichnet,**
**dass** in zumindest einer der zwei Farbfilterschichten (2, 3) ein Muster mit unterschiedlich gefärbten Musterelementen ausgebildet ist.

6. Folienkörper (1) nach einem der vorhergehenden Ansprüche,
**dadurch gekennzeichnet,**
**dass** der Folienkörper (1) eine Reflexionsschicht (5) aufweist, die in Bezug auf einen Betrachter (11) hinter der mindestens einen Farbfilterschicht (2) und der mindestens einen Änderungsschicht (4) angeordnet ist.

7. Folienkörper (1) nach einem der vorhergehenden Ansprüche,
**dadurch gekennzeichnet,**
**dass** der Folienkörper (1) mindestens eine invariable Schicht (6) aufweist, insbesondere mindestens eine gedruckte Farbschicht.

8. Folienkörper (1) nach einem der vorhergehenden Ansprüche,
**dadurch gekennzeichnet,**
**dass** mindestens eine der mindestens einen Farbfilterschicht (2) als eine cholesterische Flüssigkristallschicht ausgebildet ist, wobei bevorzugt in Bezug auf einen Betrachter (11) hinter der cholesterischen Flüssigkristallschicht eine dunkle oder streuende Schicht (7) ausgebildet ist, besonders bevorzugt in Form eines Musters.

9. Folienkörper nach einem der vorhergehenden Ansprüche,
**dadurch gekennzeichnet,**
**dass** die Dicke der Änderungsschicht (4) variiert.

10. Sicherheitselement (10) mit mindestens einem Folienkörper (1) nach einem der Ansprüche 1 bis 9 und mindestens einer die Änderungsschicht (4) steuernden Energiequelle (8).

11. Sicherheitselement (10) nach Anspruch 10,
**dadurch gekennzeichnet,**
**dass** die Energiequelle (8) eine piezoelektrische Energiequelle (8) mit mindestens einer Schicht (9) aus piezoelektrischem Material ist.

12. Sicherheitsdokument (100), insbesondere eine Banknote oder ein ID-Dokument, mit mindestens einem Folienkörper (1) nach einem der Ansprüche 1 bis 9.

13. Sicherheitsdokument (100) nach Anspruch 12,
**dadurch gekennzeichnet,**
**dass** der Folienkörper (1) zumindest bereichsweise in einem transparenten Bereich des Sicherheitsdokuments (100) angeordnet ist.

14. Transferfolie (20) mit mindestens einem Folienkörper (1) nach einem der Ansprüche 1 bis 9, wobei der mindestens eine Folienkörper (1) auf einer Trägerfolie (19) der Transferfolie (20) angeordnet und von dieser ablösbar ist.

15. Verfahren zur Herstellung eines mehrschichtigen Folienkörpers (1) nach einem der Ansprüche 1 bis 9, wobei die Farbfilterschicht (2) und/oder die mindestens eine Änderungsschicht (4) des Folienkörpers (1) durch Drucken, vorzugsweise auf eine Trägerfolie (19), gebildet werden.

## Claims

1. Multilayer film body (1) for labelling a security document (100), in particular a banknote or an ID document, which has at least one coloured filter layer (2) and at least one changing layer (4) having an electrically controllable transmission factor and/or an electrically controllable colourfulness level, which mutually overlap at least partially,
**characterised in that**,
the film body (1) comprises two coloured filter layers (2,3) of different colours and a changing layer (4) which is arranged therebetween having an electrically controllable transmission factor.

2. Film body (1) according to claim 1,
**characterised in that**,
the at least one changing layer (4) has liquid crystals (15) which are able to be aligned in an electric field.

3. Film body (1) according to one of the preceding claims,
**characterised in that**,
the at least one changing layer (4) is formed from at least one PDLC layer, wherein the PDLC layer is preferably coloured.

4. Film body (1) according to one of the preceding claims,
**characterised in that**,
one of the two coloured filter layers (2,3) is formed to be patterned and the other is formed to be completely homogenously coloured.

5. Film body (1) according to one of the preceding claims,
**characterised in that**,
a pattern having differently coloured pattern elements is formed in at least one of the two coloured filter layers (2,3).

6. Film body (1) according to one of the preceding claims,
**characterised in that**,
the film body (1) has a reflective layer (5) which is arranged behind the at least one coloured filter layer (2) and the at least one changing layer (4) with regard to an observer (11).

7. Film body (1) according to one of the preceding claims,
**characterised in that**,
the film body (1) has at least one invariable layer (6), in particular at least one printed coloured layer.

8. Film body (1) according to one of the preceding claims,
**characterised in that**,
at least one of the at least one coloured filter layer (2) is formed as a cholesteric liquid crystal layer, wherein a dark or scattering layer (7) is preferably formed behind the cholesteric liquid crystal layer with regard to an observer (11), particularly preferably in the form of a pattern.

9. Film body according to one of the preceding claims,
**characterised in that**,
the thickness of the changing layer (4) varies.

10. Security element (10) having at least one film body (1) according to one of claims 1 to 9 and at least one energy source (8) which controls the changing layer (4).

11. Security element (10) according to claim 10,
**characterised in that**,
the energy source (8) is a piezoelectric energy source (8) having at least one layer (9) made from piezoelectric material.

12. Security document (100), in particular a banknote or an ID document, having at least one film body (1) according to one of claims 1 to 9.

13. Security document (100) according to claim 12,
**characterised in that**,
the film body (1) is arranged at least in regions in a transparent region of the security document (100).

14. Transfer film (20) having at least one film body (1) according to one of claims 1 to 9, wherein the at least one film body (1) is arranged on a carrier film (19) of the transfer film (20) and is able to be released from this.

15. Method for the production of a multilayer film body (1) according to one of claims 1 to 9, wherein the coloured filter layer (2) and/or the at least one changing layer (4) of the film body (1) are formed by printing, preferably onto a carrier film (19).

## Revendications

1. Corps de film multicouche (1) conçu pour identifier un document de sécurité (100), en particulier un billet de banque ou un document d'identité, lequel corps de film multicouche comprend au moins une couche de filtre chromatique (2) et au moins une couche de modification (4) présentant un facteur de transmission à commande électrique et/ou une chromaticité à commande électrique, lesquelles se chevauchent mutuellement au moins en partie,
**caractérisé en ce que**
le corps de film (1) peut comprendre deux couches de filtre chromatique (2, 3) de couleurs différentes et une couche de modification (4) disposée entre celles-ci et présentant un facteur de transmission à commande électrique.

2. Corps de film (1) selon la revendication 1,
**caractérisé en ce que**
la ou les couches de modification (4) présentent des cristaux liquides (15) orientables dans un champ électrique.

3. Corps de film (1) selon l'une quelconque des revendications précédentes,
**caractérisé en ce que**
la ou les couches de modification (4) sont constituées d'au moins une couche PDLC, la couche PDLC étant de préférence colorée.

4. Corps de film (1) selon l'une quelconque des revendications précédentes,
**caractérisé en ce que**
une des deux couches de filtre chromatique (2, 3) présente une forme de motif et l'autre est colorée sur toute sa surface de manière homogène.

5. Corps de film (1) selon l'une quelconque des revendications précédentes,
**caractérisé en ce que**
un motif présentant des éléments de couleurs différentes est formé dans au moins une des deux couches de filtre chromatique (2, 3).

6. Corps de film (1) selon l'une quelconque des revendications précédentes,
**caractérisé en ce que**
le corps de film (1) comprend une couche réflectrice (5), laquelle est disposée, par rapport à un observateur (11), derrière la ou les couches de filtre chromatique (2) et la ou les couches de modification (4).

7. Corps de film (1) selon l'une quelconque des revendications précédentes,
**caractérisé en ce que**
le corps de film (1) comprend au moins une couche invariable (6), en particulier au moins une couche de couleur imprimée.

8. Corps de film (1) selon l'une quelconque des revendications précédentes,
**caractérisé en ce que**
au moins une de la ou des couches de filtre chromatique (2) est réalisée sous la forme d'une couche de cristal liquide cholestérique, une couche sombre ou dispersive (7), présentant de manière particulièrement préférée la forme d'un motif, étant formée de préférence par rapport à un observateur (11) derrière la couche de cristal liquide cholestérique.

9. Corps de film selon l'une quelconque des revendications précédentes,
**caractérisé en ce que**
l'épaisseur de la couche de modification (4) varie.

10. Elément de sécurité (10) pourvu d'au moins un corps de film (1) selon l'une quelconque des revendications 1 à 9 et d'au moins une source d'énergie (8) commandant la couche de modification (4).

11. Elément de sécurité (10) selon la revendication 10,
**caractérisé en ce que**
la source d'énergie (8) est une source d'énergie piézoélectrique (8) pourvue d'au moins une couche (9) composée d'un matériau piézoélectrique.

12. Document de sécurité (100), en particulier billet de banque ou document d'identité, comprenant au moins un corps de film (1) selon l'une quelconque des revendications 1 à 9.

13. Document de sécurité (100) selon la revendication 12,
**caractérisé en ce que**
le corps de film (1) est disposé au moins par endroits dans une zone transparente du document de sécurité (100).

14. Film de transfert (20) pourvu d'au moins un corps de film (1) selon l'une quelconque des revendications 1 à 9, le ou les corps de film (1) étant disposé(s) sur un film de support (19) du film de transfert (20) et pouvant être détaché(s) de ce dernier.

15. Procédé de production d'un corps de film multicouche (1) selon l'une quelconque des revendications 1 à 9, la couche de filtre chromatique (2) et/ou la ou les couches de modification (4) du corps de film (1) étant formée(s) par impression, de préférence sur un film de support (19).
